(19) Europäisches Patentamt
European Patent Office
Office européen des brevets

(11) Veröffentlichungsnummer: **0 092 512**
**B1**

(12) **EUROPÄISCHE PATENTSCHRIFT**

(45) Veröffentlichungstag der Patentschrift: **30.04.86**

(51) Int. Cl.⁴: **D 06 P 3/06**, C 09 B 67/22

(21) Anmeldenummer: **83810135.0**

(22) Anmeldetag: **31.03.83**

(54) **Verfahren zum Trichromie-Färben oder -Bedrucken.**

(30) Priorität: **08.04.82 CH 2206/82**

(43) Veröffentlichungstag der Anmeldung: **26.10.83 Patentblatt 83/43**

(45) Bekanntmachung des Hinweises auf die Patenterteilung: **30.04.86 Patentblatt 86/18**

(84) Benannte Vertragsstaaten: **AT BE CH DE FR GB LI NL**

(56) Entgegenhaltungen:
**EP-A-0 030 919**
**EP-A-0 042 357**
**EP-A-0 058 139**
**CH-B-543 634**
**DE-A-2 924 661**
**DE-A-3 111 277**
**FR-A-2 096 429**
**US-A-3 713 768**

(73) Patentinhaber: **CIBA-GEIGY AG, Klybeckstrasse 141, CH-4002 Basel (CH)**

(72) Erfinder: **Schaetzer, Harry, Waldmattstrasse 39, D-7867 Wehr 2 (DE)**
Erfinder: **Raisin, Helmut, Im Baumgarten 9, CH-4125 Riehen (CH)**
Erfinder: **Mäusezahl, Dieter, Dr., Langgartenstrasse 19, CH-4105 Biel-Benken (CH)**

**EP 0 092 512 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die der vorliegenden Erfindung zugrundeliegende Aufgabe war es, ein Verfahren zum Färben oder Bedrucken von natürlichen und synthetischen Polyamidmaterialien mit zur Kombination nach dem Trichromie-Prinzip geeigneten Farbstoffen zu finden. Die in dem Verfahren zu verwendenden Farbstoffe sollen einen gleichmässigen Farbaufbau bei gleichzeitiger Nuancenkonstanz in verschiedenen Konzentrationen und eine gute Kombinierbarkeit zeigen.

Es wurde nun gefunden, dass das unten beschriebene Verfahren den genannten Anforderungen genügt.

Gegenstand der vorliegenden Erfindung ist somit ein Verfahren zum Trichromie-Färben oder -Bedrucken von natürlichen und synthetischen Polyamidmaterialien mit Farbstoffmischungen, welches dadurch gekennzeichnet ist, dass man

a) einen roten Farbstoff der Formel

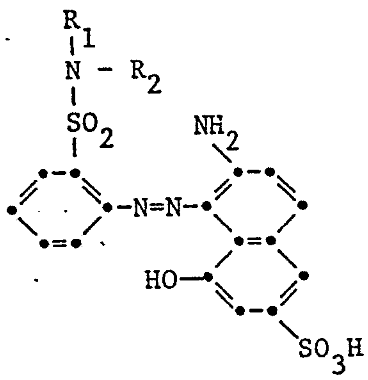

(1),

worin $R_1$ Methyl oder Aethyl und $R_2$ Cyclohexyl oder Phenyl bedeuten,

b) als blauen Farbstoff eine Farbstoffmischung der Formeln

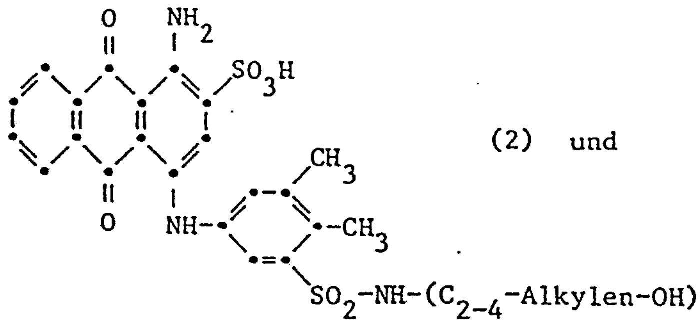

(2) und

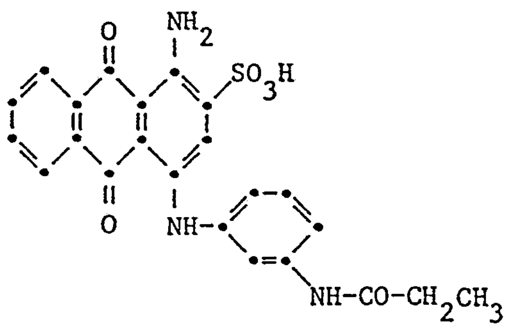

(3)

im Gewichtsverhältnis 90:10 bis 10:90 und

c) als gelben bzw. orangen Farbstoff einen Farbstoff der Formel

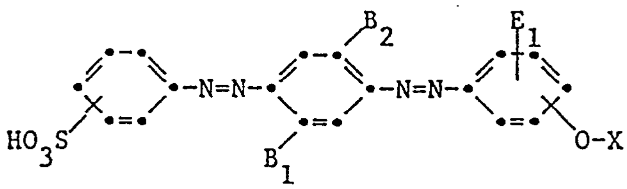

(4),

worin $B_1$ $C_{1-4}$-Alkyl oder $C_{1-4}$-Alkoxy und $B_2$ und $E_1$ unabhängig voneinander Wasserstoff, $C_{1-4}$-Alkyl oder $C_{1-4}$-Alkoxy und X geradkettiges oder verzweigtes $C_{1-4}$-Alkyl oder geradkettiges oder verzweigtes $C_{2-4}$-Hydroxyalkyl bedeuten, oder eine Mischung der Farbstoffe der Formeln (4) und

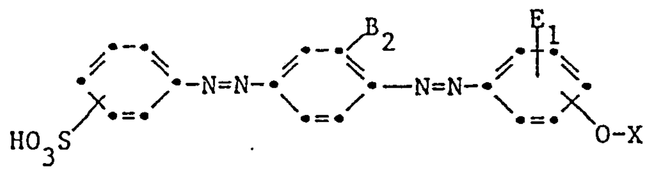

(5),

worin $B_2$, $E_1$ und X in Formel (5) unabhängig voneinander die unter Formel (4) angegebenen Bedeutungen haben, im Gewichtsverhältnis 80:20 bis 20:80, oder eine Mischung der Farbstoffe der Formeln (4), (5) und

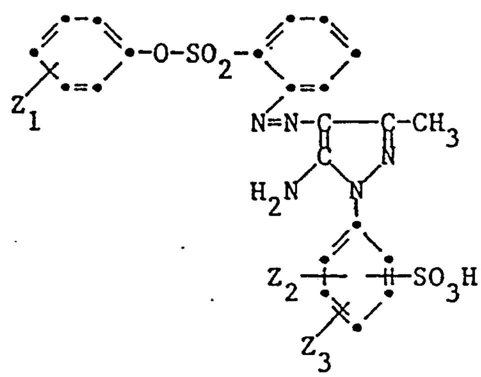

(6),

worin $Z_1$, $Z_2$ und $Z_3$ unabhängig voneinander Wasserstoff Halogen $C_{1-4}$-Alkyl oder $C_{1-4}$-Alkoxy bedeuten im Gewichtsverhältnis der Farbstoffe der Formeln (4), (5) und (6) von 80:10:10, 10:80:10 bis 10:10:80 verwendet.

Unter Trichromie ist die additive Farbmischung passend gewählter gelb- bzw. orange-, rot- und blaufärbender Farbstoffe zu verstehen mit denen jede gewünschte Nuance des sichtbaren Farbspektrums durch geeignete Wahl der Mengenverhältnisse der Farbstoffe eingestellt werden kann.

In der EP-A-30919 wird ein Trichromie-Verfahren beschrieben, in dem man eine Mishung der Farbstoffe (1), (2) und (5) verwendet. Aus der FR-A-2096 429 und der EP-A-42 357 sind weitere Trichromie Verfahren mit einer strukturell verschiedenen Gelbkomponente bekannt.

Als Alkylreste kommen für $B_1$, $B_2$, $E_1$, X, $Z_1$, $Z_2$ und $Z_3$ in den Formeln (4), (5) und (6) unabhängig voneinander geradkettige oder verzweigte Alkylreste in Betracht, wie beispielsweise Methyl, Aethyl, Propyl, Isopropyl, Butyl, sek.-Butyl, Isobutyl und tert.-Butyl.

Als Alkoxyreste kommen für $B_1$, $B_2$, $E_1$, $Z_1$, $Z_2$ und $Z_3$ in den Formeln (4), (5) und (6) beispielsweise der Methoxy-, Aethoxy-, Propoxy-, Isopropoxy-, Butoxy-, sek.-Butoxy-, Isobutoxy- oder tert.-Butoxyrest in Betracht.

Als Hydroxyalkylrest kommt für X in den Formeln (4) und (5) unabhängig voneinander ein geradkettiger oder verzweigter Hydroxyalkylrest in Betracht, wie beispielsweise der β-Hydroxyäthyl-, β-Hydroxypropyl-, β-Hydroxybutyl- oder der α-Aethyl-β-hydroxyäthylrest.

Als $-SO_2NH-$ ($C_{2-4}$-Alkylen-OH) kommt in Formel (2) beispielsweise der β-Hydroxyäthylsulphamoyl-, β-Hydroxypropylsulphamoyl-, γ-Hydroxypropylsulphamoyl- oder der β-Hydroxybutylsulphamoylrest in Betracht.

Als Halogen kommt für $Z_1$, $Z_2$ und $Z_3$ in Formel (6) unabhängig voneinander Fluor oder Brom und insbesondere Chlor in Betracht.

Als roter Farbstoff der Formel (1) sind die Farbstoffe der Formeln

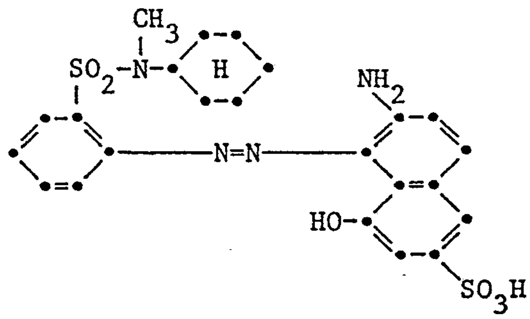

(7) und

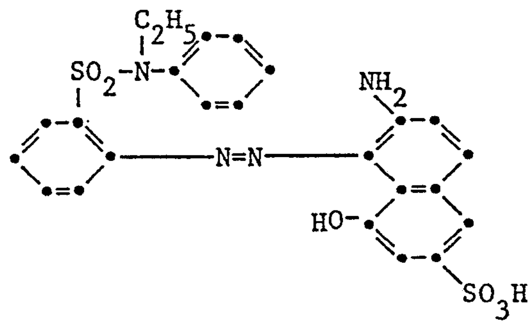

(8)

bevorzugt.

Vorzugsweise verwendet man als blauen Farbstoff ein Gemisch der beiden Farbstoffe der Formeln

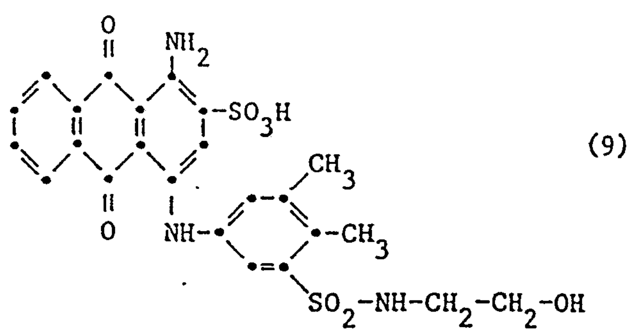

(9) und

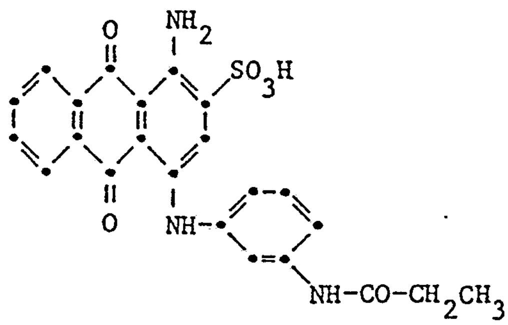

(3)

im Gewichtsverhältnis von vorzugsweise 80:20 bis 20:80 und inbesondere von 60:40 bis 40:60.

Als gelben bzw. orangen Farbstoff verwendet man in dem erfindungsgemässen Verfahren vorteilhaft einen Farbstoff der Formel

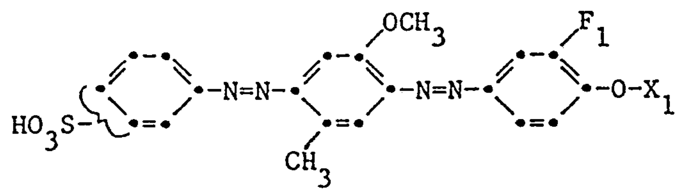

(10),

worin $F_1$ Wasserstoff oder Methyl und $X_1$ Methyl Aethyl β-Hydroxyäthyl, β-Hydroxypropyl, β-Hydroxybutyl oder α-Aethyl-β-hydroxyäthyl ist, oder eine Mischung der Farbstoffe der Formeln (10) und

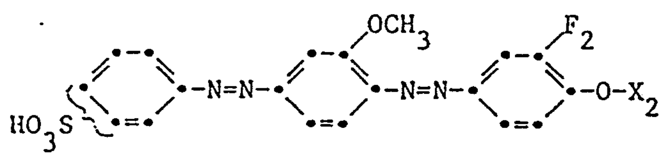

(11),

worin $F_2$ Wasserstoff oder Methyl und $X_2$ Methyl, Aethyl, β-Hydroxyäthyl, β-Hydroxypropyl, β-Hydroxybutyl oder α-Aethyl-β-hydroxyäthyl ist, im Gewichtsverhältnis von 60:40 bis 40:60 und insbesondere von 50:50, oder eine Mischung der Farbstoffe der Formeln (10), (11) und

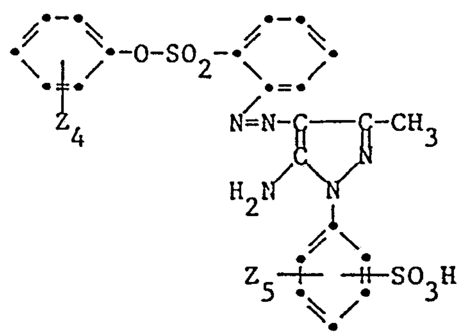

(12),

worin $Z_4$ und $Z_5$ unabhängig voneinander Wasserstoff, Methyl oder Chlor sind, im Gewichtsverhältnis von 60:20:20, 20:60:20 bis 20:20:60 und insbesondere im Gewichtsverhältnis 1:1:1.

Die besonders bevorzugten Verfahrensvarianten sind dadurch gekennzeichnet, dass man den roten Farbstoff der Formel (7) oder den der Formel (8) zusammen mit der blauen Farbstoffmischung der Formeln (9) und (3) im Gewichtsverhältnis von 80:20 bis 20:80, vorteilhaft von 60:40 bis 40:60 und insbesondere von 52:48

a) mit dem orangen Farbstoff der Formel

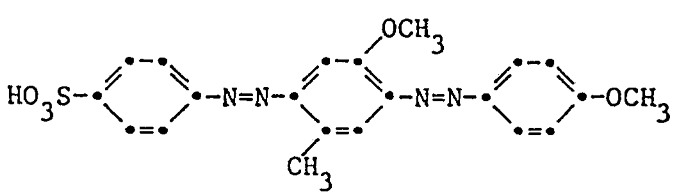

(13)

b) mit der gelben Farbstoffmischung der Formeln

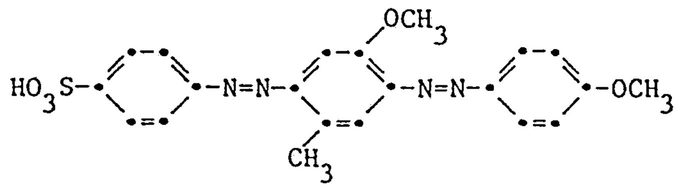

(13)

und

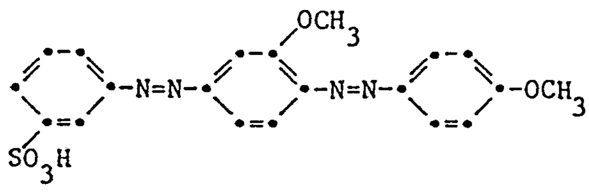

(14),

im Gewichtsverhältnis von 60:40 bis 40:60 und inbesondere von 50:50 oder
c) mit der gelben Farbstoffmischung der Formeln (13), (14) und

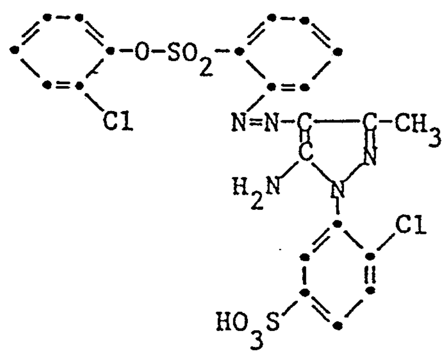

(15)

im Gewichtsverhältnis 1:1:1 verwendet.

Die in dem erfindungsgemässen Verfahren zum Trichromie-Färben oder Bedrucken verwendeten Farbstoffe sind bekannt oder können in Analogie zu bekannten Verfahren hergestellt werden. So können beispielsweise die Farbstoffe der Formel (1) gemäss den Angaben aus der deutschen Patentschrift 702 932 und 2063907, die Farbstoffe der Formeln (9) und (3) gemäss den Angaben aus den US-Patentschriften 3 778 453 und 1 927 125 und die Farbstoffe der Formeln (13), (14) und (15) gemäss den Angaben der deutschen Offenlegungsschrift 21 42 412 und der deutschen Auslegeschrift 11 00 846 hergestellt werden.

Werden in dem erfindungsgemässen Verfahren Farbstoffmischungen der Farbstoffe der Formeln (2) und (3) oder der Formeln (4), (5) und (6) verwendet, so kann diese durch Mischung der Einzelfarbstoffe hergestellt werden. Dieser Mischprozess erfolgt beispielsweise in geeigneten Mühlen, z.B. Kugel- und Stiftmühlen, sowie in Knetern oder Mixern.

Ferner können die Farbstoffmischungen der Farbstoffe der Formel (2) und (3) oder der Formeln (4) und (5) oder (4), (5) und (6) durch Zerstäubungstrocknen der wässrigen Farbstoffmischungen hergestellt werden.

Die in dem erfindungsgemässen Verfahren verwendeten Farbstoffe liegen entweder in der Form ihrer freien Sulfonsäure oder vorzugsweise als deren Salze vor.

Als Salze kommen beispielsweise die Alkali-, Erdalkali- oder Ammoniumsalze oder die Salze eines organischen Amins in Betracht. Als Beispiele seien die Natrium-, Lithium-, Kalium- oder Ammoniumsalze oder das Salz des Triäthanolamins genannt.

Die in dem erfindungsgemässen Verfahren verwendeten Farbstoffe enthalten in der Regel weitere Zusätze wie z.B. Kochsalz oder Dextrin.

Das erfindungsgemässe Verfahren zum Trichromie-Färben oder -Bedrucken kann auf die üblichen Färbe- bzw. Druckverfahren angewendet werden. Die Färbeflotten oder Druckpasten können ausser Wasser und den Farbstoffen weitere Zusätze, beispielsweise Netzmittel, Antischaummittel, Egalisiermittel oder die Eigenschaft des Textilmaterials beeinflussende Mittel wie z.B. Weichmachungsmittel, Zusätze zum Flammfestausrüsten oder

schmutz-, wasser- und öl-abweisende Mittel sowie wasserenthärtende Mittel und natürliche oder synthetische Verdicker, wie z.B. Alginate und Celluloseäther, enthalten.

Das erfindungsgemässe Verfahren ist besonders zum Färben aus Kurzflotten, wie z.B. bei Kontinuefärbeverfahren oder diskontinuierlichen und kontinuierlichen Schaumfärbeverfahren, geeignet.

Die in dem erfindungsgemässen Verfahren verwendeten Farbstoffe zeichnen sich beim Trichromie-Färben oder -Bedrucken durch gleichmässigen Farbaufbau, gutes Aufziehverhalten, gute Nuancenkonstanz auch in verschiedenen Konzentrationen, gute Echtheiten sowie insbesondere durch sehr gute Kombinierbarkeit aus.

Das erfindungsgemässe Verfahren eignet sich zum Färben oder Bedrucken sowohl von natürlichen Polyamidmaterialien wie z.B. Wolle wie insbesondere von synthetischen Polyamidmaterialien wie z.B. Perlon oder Nylon und es ist geeignet zum Färben oder Bedrucken von Woll- und synthetischem Polyamid-Mischgeweben oder -Garnen.

Das genannte Textilmaterial kann dabei in den verschiedensten Verarbeitungsformen vorliegen, wie z.B. als Faser, Garn, Gewebe oder Gewirke und insbesondere in Form von Teppichen.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

**Beispiel 1:** Zur Herstellung der Farbstoffmischung, die einen Farbstoff der Formel

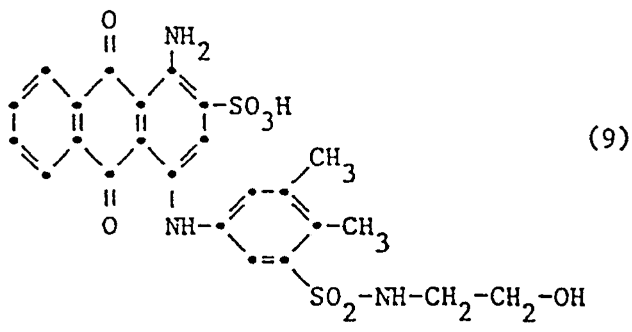

(9)

und einen Farbstoff der Formel

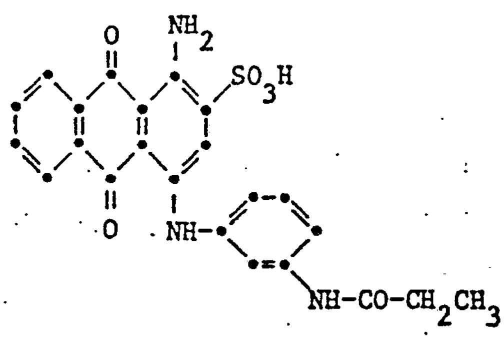

(3)

enthält werden in einem Mixer

a) 26,6 Teile des Farbstoffs der Formel (9) und 73,4 Teile des Farbstoffs der Formel (3) homogen gemischt und ergeben 100 Teile der Mischung, die im folgende als Farbstoffmischung A bezeichnet wird;

b) 52 Teile des Farbstoffs der Formel (9) und 48 Teile des Farbstoffs der Formel (3) homogen gemischt und ergeben 100 Teile der Mischung die im folgenden als Farbstoffmischung B bezeichnet wird,

c) 76,5 Teile des Farbstoffs der Formel (9) und 23,5 Teile des Farbstoffs der Formel (3) homogen gemischt und ergeben 100 Teile der Mischung, die im folgenden als Farbstoffmischung C bezeichnet wird.

**Beispiel 2:** Man färbt 10 Teile Helancatrikot in 500 Teilen einer wässrigen Flotte, die 2 g/l Ammonacetat enthält und mit Essigsäure auf pH 5 gestellt wird. Als Farbstoffe werden 0,12 % des roten Farbstoffs der Formel

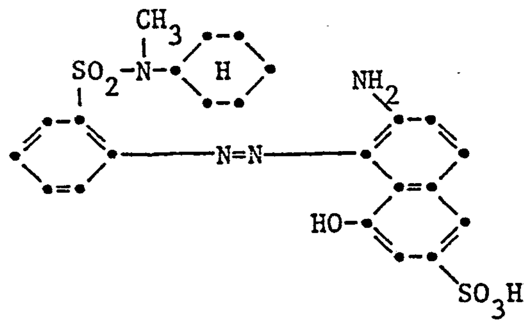

(7)

0,27 % des orangen Farbstoffs der Formel

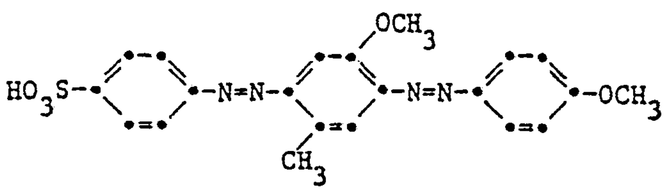

(13)

und 0,13 % der gemäss Beispiel (1b) erhaltenen blauen Farbstoffmischung B verwendet, wobei sich die Mengenangaben auf das Fasergewicht beziehen. Die Färbedauer bei einer Temperatur von 98°C beträgt 30 bis 90 Minuten. Das gefärbte Helancastück wird anschliessend herausgenommen und wie ublich gespült und getrocknet. Man erhält ein in neutral brauner Nuance völlig egal gefärbtes Gewebestück, das keinerlei materialbedingte Streifigkeit aufweist.

Verwendet man anstelle von 0,27 % des orangen Farbstoffs der Formel (13) und 0,12 % des roten Farbstoffs der Formel (7) sowie 0,13 % der blauen Farbstoffmischung B die in der folgenden Tabelle 1 angegebenen Farbstoffe der Formeln (13) und (7) sowie die Farbstoffmischungen aus Beispiel 1, so erhält man die in der angegebenen Nuance völlig egal gefärbten Gewebestücke.

**Tabelle 1:**

| Beispiel | verwendete Farbstoffe | Nuance |
|---|---|---|
| 3 | 0,18 % des Farbstoffs der Formel (13)<br>0,18 % des Farbstoffs der Formel (7)<br>0,077 % der Farbstoffmischung C | rotstichig braun |
| 4 | 0,25 % des Farbstoffs der Formel (13)<br>0,04 % des Farbstoffs der Formel (7)<br>0,14 % der Farbstoffmischung A | oliv |

**Beispiel 5:** Man färbt 10 Teile Polyamid 66-Garn in 400 Teilen einer wässrigen Flotte, die 1,5 g/l Ammonacetat enthält und mit Essigsäure auf pH 5,5 gestellt wird. Als Farbstoffe werden 0,27 % des Farbstoffs der Formel (13),

0,12 % des Farbstoffs der Formel (7) und 0,13 % der gemäss Beispiel 1b) erhaltenen Farbstoffmischung B verwendet, wobei sich die Mengenangaben auf das Fasergewicht beziehen. Das Färbebad wird innerhalb von 30 Minuten auf 98°C erhitzt und 60 Minuten bei 96° bis 98°C gehalten. Das gefärbte Garn wird anschliessend herausgenommen und wie üblich gespült und getrocknet. Man erhält ein in neutral brauner Nuance gefärbtes Garn.

Verwendet man anstelle von 0,27 % des gelben Farbstoffs der Formel (13) und 0,12 % des roten Farbstoffs der Formel (7) sowie 0,13 % der blauen Farbstoffmischung B die in der folgenden Tabelle 2 angegebenen Farbstoffe der Formeln (13) und (7) sowie die Farbstoffmischungen aus Beispiel 1, so erhält man das in der angegebenen Nuance gefärbte Garn.

**Tabelle 2:**

| Beispiel | verwendete Farbstoffe | Nuance |
|---|---|---|
| 6 | 0,18 % des Farbstoffs der Formel (13)<br>0,18 % des Farbstoffs der Formel (7)<br>0,077 % der Farbstoffmischung C | rotstichig braun |
| 7 | 0,25 % des Farbstoffs der Formel (13)<br>0,05 % des Farbstoffs der Formel (7)<br>0,14 % der Farbstoffmischung A | oliv |

Verwendet man ferner anstelle des orangen Farbstoffs der Formel (13) eine 1:1-Mischung des orangen Farbstoffs der Formel

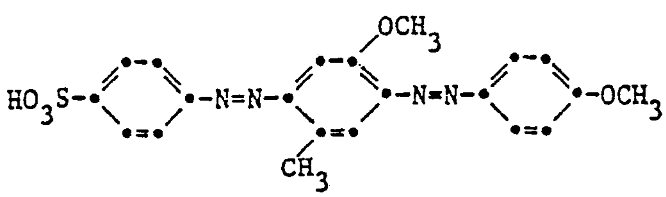

(13)

und des gelben Farbstoffs der Formel

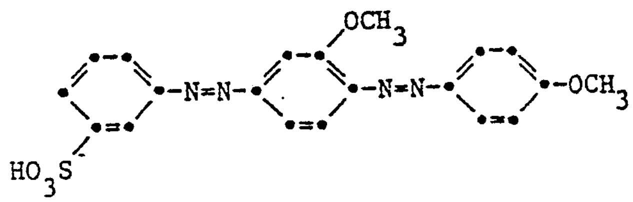 (14),

die in den folgenden Beispielen als Farbstoffmischung X bezeichnet wird, zusammen mit dem roten Farbstoff der Formel (7) und den Farbstoffmischungen aus Beispiel 1, so erhält man mit den in der folgenden Tabelle 3 angegebenen Farbstoffen das in der angegebenen Nuance gefärbte Garn.

**Tabelle 3:**

| Beispiel | Farbstoffe | Nuance |
|---|---|---|
| 8 | 0,27 % des Farbstoffmischung X<br>0,1 % des Farbstoffs der Formel (7)<br>0,14 % der Farbstoffmischung B | neutral braun |
| 9 | 0,18 % des Farbstoffmischung X<br>0,12 % des Farbstoffs der Formel (7)<br>0,09 % der Farbstoffmischung C | rotstichig braun |
| 10 | 0,25 % des Farbstoffmischung X<br>0,03 % des Farbstoffs der Formel (7)<br>0,16 % der Farbstoffmischung A | oliv |

**Beispiel 11:** Verfährt man wie in Beispiel 5 angegeben und verwendet bei sonst gleicher Verfahrensweise anstelle von 0,27 % des Farbstoffs der Formel (13) 0,27 % der gelben Farbstoffmischung, welche die Farbstoffe der Formeln

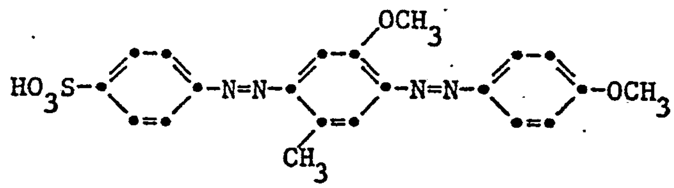

(13) ,

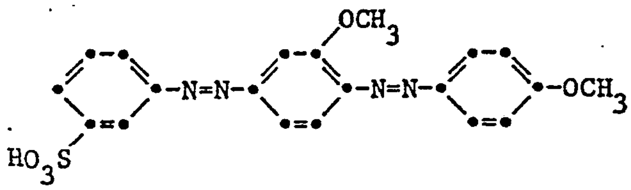

(14) und

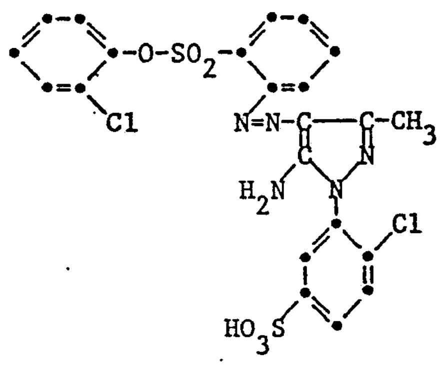

(15)

im Verhältnis 1:1:1 enthält so erhält man ein in neutral brauner Nuance gefärbtes Garn.

Verwendet man anstelle von 0 13 % der Farbstoffmischung B die in der folgenden Tabelle 4 angegebenen Farbstoffmischungen A und C und als Farbstoffmischung Y das oben angegebene I:I:I-Gemisch der Farbstoffe der Formeln (13), (14) und (15), so erhält man ein in der angegebenen Nuance gefärbtes Garn.

**Tabelle 4:**

| Beispiel | Farbstoffe | Nuance |
|---|---|---|
| 12 | 0,18 % des Farbstoffmischung Y<br>0,12 % des Farbstoffs der Formel (7)<br>0,09 % der Farbstoffmischung C | rotstichig braun |
| 13 | 0,25 % des Farbstoffmischung Y<br>0,03 % des Farbstoffs der Formel (7)<br>0,16 % der Farbstoffmischung A | olive |

**Beispiel 14:** 500 $m^2$ eines Polyamid (6.6)-Schnittflorteppichs (Veloursware mit Polypropylenbändchenrücken) mit einem Quadratmetergewicht von 535 g werden in einer Flotte, die pro Liter 1 g des Umsetzungsprodukts aus 1 Mol Nonylphenol und 9 Mol Aethylenoxyd enthält, kontinuierlich vorgenetzt und dann auf eine Flottenaufnahme von 40 Gewichtsprozent abgesaugt.

In einer Verschäumungsvorrichtung (Mixer) wird aus folgender wässeriger Flotte ein Farbschaum hergestellt, dessen Verschäumungsgrad 1:10 beträgt:

0,6 g/l des orangen Farbstoffs der Formel (13),
0,4 g/l des roten Farbstoffs der Formel (7),
0,35 g/l der blauen Farbstoffmischung B,
2,5 g/l eines Schaumstabilisatorgemisches aus Kokosfettsäurediäthanolamid/Nonylphenolpolyglykol(II)äther und Lauryltriglykoläthersulfat-Natrium,
0,6 g/l des Siloxanoxyalkylen-Copolymerisates der Formel

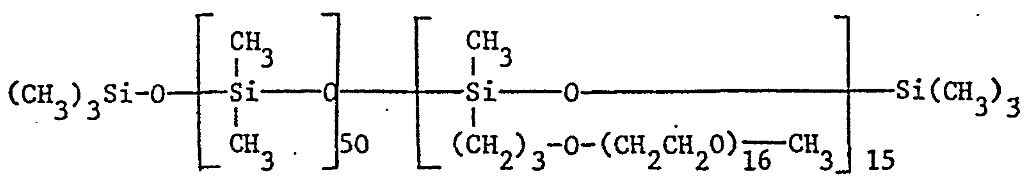

1 g/l Natriumacetat, sowie Essigsäure zur Einstellung der Flotte auf einen pH-Wert von 6,0.

Dieser Schaum wird dann aus einem Schaumbehälter, der eine verstellbare Rakel für die Einstellung der gewünschten Schaumdicke aufweist über eine Auftragswalze mittels einer Rutsche auf die Polseite des durch die Färbeanlage laufenden Teppichs aufgebracht (Laufgeschwindigkeit 9 m/Minute). Die Schichthöhe des Schaums beträgt 8 mm. Der Farbschaumauftrag beträgt 135 %.

Anschliessend durchläuft der Teppich eine Vakuumpassage, in der von der Rückseite her die Schaumschicht teilweise in den Teppich eingesaugt wird (Unterdruck von 0,1 bar), wodurch die Höhe der Schaumschicht etwas reduziert wird. Ueber eine Transportwalze läuft der Teppich dann in einen Dämpfer (102°C Sattdampf), wo ein leichtes Aufschäumen und dann ein Zerstören des Schaums erfolgt. Anschliessend wird der Teppich mit Wasser von etwa 80°C abgespritzt, dann abgesaugt und bei 100 bis 130°C auf einem Siebtrommeltrockner getrocknet.

Das erhaltene Teppichmaterial ist egal, in einem beigen Farbton gefärbt, zeigt eine hervorragende Durchfärbung, die Weichheit und Bauschigkeit des Materials wird durch das Schaumfärben positiv beeinflusst.

**Beispiel 15:** (Teppichdruck) Ein Velours-Teppichboden aus Polyamid-6 mit einem Gewicht von 350 bis 400 g/m wird mit einer Klotzflotte, bestehend aus 988 Teilen Wasser, 10 Teilen Natronlauge 36° Bé und 2 Teilen Netzmittel, auf einem Foulard imprägniert und auf eine Flottenaufnahme von 80% abgequetscht.

Auf den so vorbehandelten Teppich wird mittels einer Düse eine Farbpaste der folgenden Zusammensetzung in Form eines Musters aufgespritzt:

942 Teile Wasser,
50 Teile Verdicker,
3 Teile Antischaummittel,
3 Teile der Farbstoffmischung X von Beispiel 8, 9 oder 10,
1 Teil des roten Farbstoffes der Formel (7) von Beispiel 2, sowie 1 Teil der blauen Farbstoffmischung A von Beispiel 1.

Der verwendete Verdicker weist die folgende Zusammensetzung auf:
240 Teile Lackbenzin,
50 Teile Wasser-in-Oel-Emulgator,
20 Teile Oel-in-Wasser-Emulgator,
20 Teile Antischaummittel,
50 Teile vernetztes Carboxyvinylpolymer mit einem Molekulargewicht von ca. 4.000.000,
70 Teile lineares Carboxyvinylpolymer mit einem Molekulargewicht von ca. 1.000.000, und
550 Teile Wasser, dessen pH-Wert mit Essigsäure auf 4,5 gestellt wurde.

Das mit der Farbpaste bespritzte Material wird anschliessend während 5 Minuten mit Sattdampf von 101°C behandelt zur Fixierung der Farbstoffe, gespült, neutralisiert, erneut gespult und getrocknet.

Man erhält einen Velours-Teppichboden mit einem braunen Muster mit sehr scharfen Konturen, welcher eine sehr gute Penetration und keinerlei "Frosting" aufweist.

**Beispiel 16:** (Teppich-Kontinue-Färbung)

2,7 Teile der Farbstoffmischung Y von Beispiel 11, 1,2 Teile des roten Farbstoffs der Formel (7) von Beispiel 2 und 1,3 Teile der blauen Farbstoffmischung B von Beispiel 1 werden in 100 Teilen Wasser durch kurzes Kochen gelöst. Diese Lösung wird hierauf zu einer Lösung, enthaltend 3 Teile eines Verdickungsmittels auf der Basis von Johannisbrotkernmehl 5,0 Teile eines koazervatbildenden Klotzhilfsmittels auf der Basis eines Kondensationsproduktes einer höher molekularen Fettsäure mit einem Oxyalkylamin, 2,0 Teilen krist. Mononatriumphosphat und 1,0 Teile krist. Dinatriumphosphat in 500 Teilen kaltem Wasser zugegeben. Anschliessend wird mit kaltem Wasser auf 1000 Teile aufgefullt. Von dieser, einen pH-Wert von 5,5 bis 6,5 aufweisenden Flotte werden 300 %, bezogen auf das Teppichgewicht, auf einen Polyamid-Nadelflor-Rohteppich aufgetragen, bei einer Teppichgeschwindigkeit von 8 Meter pro Minute. Der getränkte Teppich gelangt in einen Schleifendämpfer, wo er während 10 Minuten mit Sattdampf von 98 bis 100°C behandelt wird.

Nach dem Waschen in einer Breitwaschmaschine erhält man einen in neutral brauner Nunace gefärbten Teppich.

Verwendet man anstelle von 2,7 Teilen der Farbstoffmischung Y 1,2 Teile des roten Farbstoffs der Formel (7) und 1,3 Teile der blauen Farbstoffmischung B die in der folgenden Tabelle 5 angegebenen Farbstoffe bzw. Farbstoffmischungen, so erhält man in der angegebenen Nuance gleichmässig gefärbte Teppiche.

**Tabelle 5:**

| Beispiel | Farbstoffe | Nuance |
|---|---|---|
| 17 | 2,4 Teile der Farbstoffmischung Y<br>2,3 Teile des Farbstoffs der Formel (7)<br>1,0 Teile der Farbstoffmischung B | rotbraun |
| 18 | 3,0 Teile der Farbstoffmischung Y<br>0,4 Teile des Farbstoffs der Formel (7)<br>1,2 Teile der Farbstoffmischung B | oliv |

**Beispiel 19:** Man färbt 10 Teile Polyamid 6,6-Garn in 400 Teilen einer wässrigen Flotte, die 1,5 g/l Ammonacetat enthält und mit Essigsäure auf pH 5,5 gestellt wird. Als Farbstoffe werden 0,27 % des Farbstoffs der Formel (13), 0,12 % des Farbstoffs der Formel

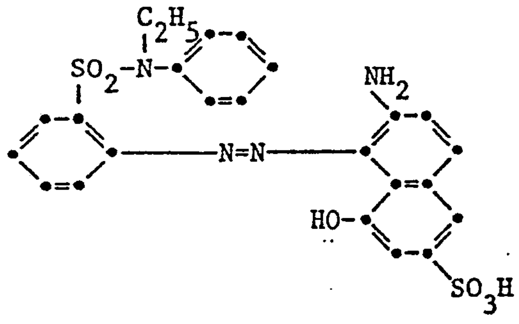

(8)

und 0,13 % der gemäss Beispiel 1b) erhaltenen Farbstoffmischung B verwendet, wobei sich die Mengenangaben auf das Fasergewicht beziehen. Das Färbebad wird innerhalb von 30 Minuten auf 98°C erhitzt und 60 Minuten bei 96° bis 98°C gehalten. Das gefärbte Garn wird anschliessend herausgenommen und wie üblich gespült und getrocknet. Man erhält ein in neutral brauner Nuance gefärbtes Garn.

**Beispiel 20:** (Woll-Kontinue-Färbung)

Ein Wollstoff wird mit einer Flotte, enthaltend 2,6 Teile der Farbstoffmischung X von Beispiel 15, 5,2 Teile des roten Farbstoffs der Formel (7), 15,7 Teile der blauen Farbstoffmischung B, 2,0 Teile eines Verdickungsmittels auf der Basis von Alginat, 22,0 Teile eines koazervatbildenden Klotzmittels auf der Basis eines Kondensationsproduktes einer höher molekularen Fettsäure mit einem Oxyalkylamin und 8,0 Teile 80%ige Ameisensäure in 1000 Teilen Wasser foulardiert, wobei eine Flottenaufnahme von 85%, bezogen auf das Gewicht von Wolle, erreicht wird. Anschliessend dämpft man während 15 Minuten in Sattdampf von 98 bis 100°C und wäscht. Man erhält eine gleichmässige Olivefärbung.

**Beispiel 21:** Verfährt man wie in Beispiel 5 angegeben und verwendet bei sonst gleicher Verfahrensweise anstelle von 0,12 % des Farbstoffs der Formel (7), 0,12 % des Farbstoffs der Formel (8), so erhält man ein in neutral brauner Nuance gefärbtes Garn.

**Patentansprüche:**

1. Verfahren zum Trichromie-Färben oder -Bedrucken von natürlichen und synthetischen Polyamidmaterialien mit Farbstoffmischungen, dadurch gekennzeichnet, dass man einen roten Farbstoff der Formel

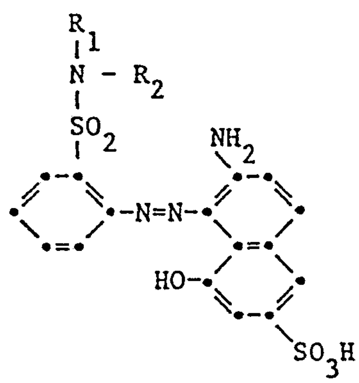

(1),

worin $R_1$ Methyl oder Aethyl und $R_2$ Cyclohexyl oder Phenyl bedeuten, zusammen mit einer blauen Farbstoffmischung der Formeln

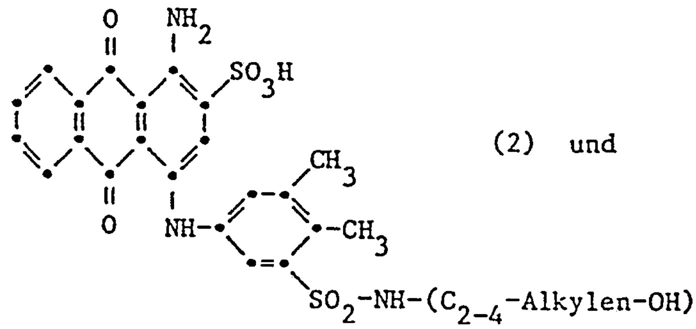

(2) und

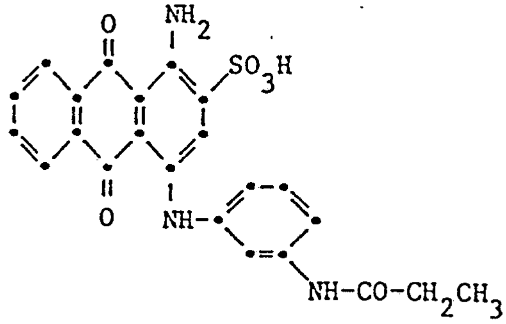

(3)

im Gewichtsverhältnis 90:10 bis 10:90 und einem gelben bzw. orangen Farbstoff der Formel

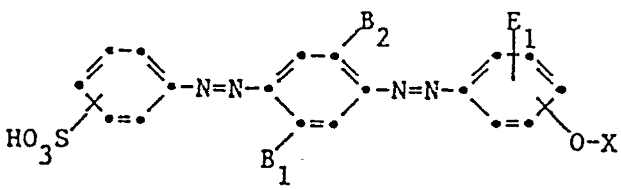

(4),

worin $B_1$ $C_{1-4}$-Alkyl oder $C_{1-4}$-Alkoxy, $B_2$ und $E_1$ unabhängig voneinander Wasserstoff, $C_{1-4}$-Alkyl oder $C_{1-4}$-Alkoxy und X geradkettiges oder verzweigtes $C_{1-4}$-Alkyl oder geradkettiges oder verzweigtes $C_{2-4}$-Hydroxyalkyl bedeuten, oder einer Mischung der gelben bzw. orangen Farbstoffe der Formeln (4) und

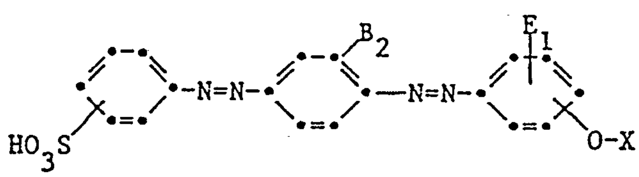

(5),

worin $B_2$, $E_1$ und X in Formel (5) unabhängig voneinander die unter Formel (4) angegebenen Bedeutungen haben, im Gewichtsverhältnis 80:20 bis 20:80, oder einer Mischung der gelben bzw. orangen Farbstoffe der Formeln (4), (5) und

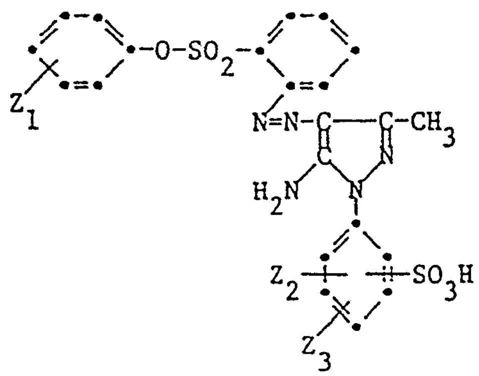

(6),

worin $Z_1$, $Z_2$ und $Z_3$ unabhängig voneinander Wasserstoff, Halogen, $C_{1-4}$-Alkyl oder $C_{1-4}$-Alkoxy bedeuten, im Gewichtsverhältnis der Farbstoffe der Formeln (4), (5) und (6) von 80:10:10 10:80:10 bis 10:10:80 verwendet.

2. Verfahren gemäss Anspruch 1, dadurch gekennzeichnet, dass man einen Farbstoff der Formel (1) zusammen mit einer Farbstoffmischung der Formeln (2) und (3) und einem Farbstoff der Formel (4) verwendet.

3. Verfahren gemäss Anspruch 1, dadurch gekennzeichnet, dass man einen Farbstoff der Formel (I) zusammen mit einer Farbstoffmischung der Formeln (2) und (3) und einer Mischung der Farbstoffe der Formeln (4) und (5) verwendet.

4. Verfahren gemäss Anspruch 1, dadurch gekennzeichnet, dass man einen Farbstoff der Formel (1) zusammen mit einer Farbstoffmischung der Formeln (2) und (3) und einer Mischung der Farbstoffe der Formeln (4), (5) und (6) verwendet.

5. Verfahren gemäss einem der Ansprüche 1 bis 4, dadurch gekennzeichnet, dass man als Farbstoff der Formel (1) den roten Farbstoff der Formel

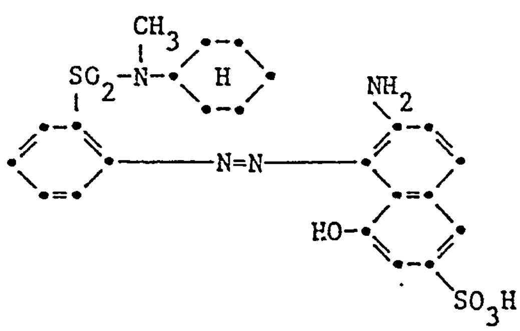

(7)

verwendet

6. Verfahren gemäss einem der Ansprüche 1 bis 4, dadurch gekennzeichnet, dass man als Farbstoff der Formel (1) den roten Farbstoff der Formel

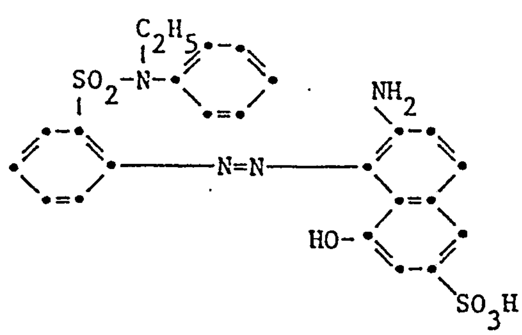

(8)

verwendet.

7.Verfahren gemäss einem der Ansprüche 1 bis 6, dadurch gekennzeichnet, dass man als blaue Farbstoffe der

Formeln (2) und (3) die beiden Farbstoffe der Formeln

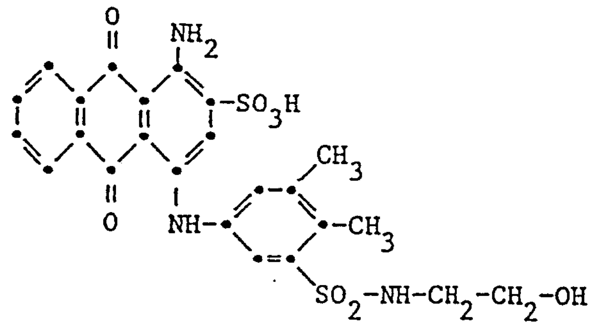

(9) und

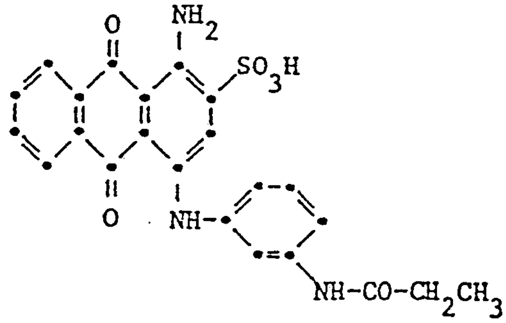

(3)

im Gewichtsverhältnis von 80:20 bis 20:80 und insbesondere von 60:40 bis 40:60 verwendet.

8. Verfahren gemäss einem der Ansprüche 1 bis 7, dadurch gekennzeichnet, dass man als gelben bzw. orangen Farbstoff der Formel (4) einen Farbstoff der Formel

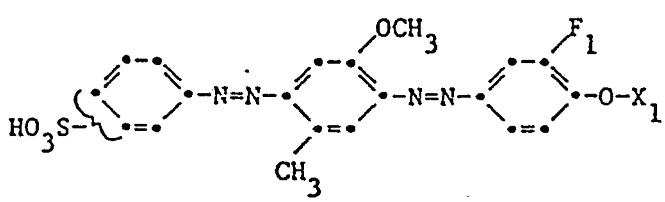

(10),

worin $F_1$ Wasserstoff oder Methyl und $X_1$ Methyl, Aethyl, β-Hydroxyäthyl, β-Hydroxypropyl, β-Hydroxybutyl oder α-Aethyl-β-hydroxyäthyl ist, verwendet.

9. Verfahren gemäss einem der Ansprüche 1, 3 und 5 bis 7, dadurch gekennzeichnet, dass man als Mischung der gelben bzw. orangen Farbstoffe der Formeln (4) und (5) eine Mischung der Farbstoffe der Formeln

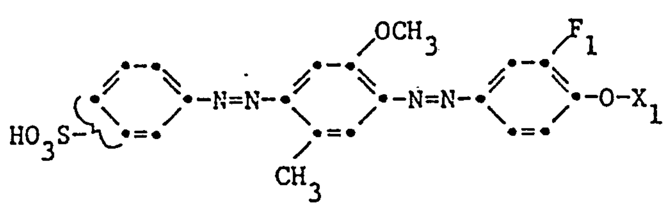

(10),

worin $F_1$ Wasserstoff oder Methyl und $X_1$ Methyl, Aethyl, β-Hydroxyäthyl β-Hydroxypropyl, β-Hydroxybutyl oder α-Aethyl-β-hydroxyäthyl ist, und

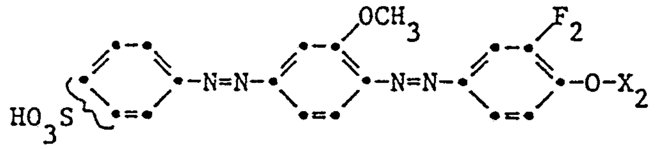

(11),

worin $F_2$ Wasserstoff oder Methyl und $X_2$ Methyl, Aethyl, β-Hydroxyäthyl, β-Hydroxypropyl, β-Hydroxybutyl oder α-Aethyl-β-hydroxyäthyl ist im Gewichtsverhältnis von 60:40 bis 40:60 und insbesondere von 50:50 verwendet.

10. Verfahren gemäss einem der Ansprüche 1 und 4 bis 7, dadurch gekennzeichnet, dass man als Mischung der gelben bzw. orangen Farbstoffe der Formeln (4), (5) und (6) eine Mischung der Farbstoffe der Formeln

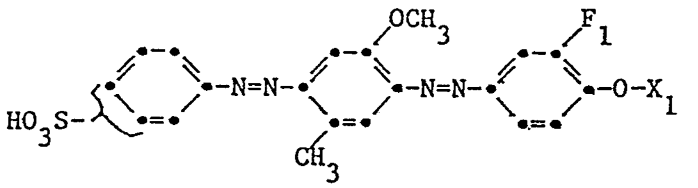

(10),

worin $F_1$ Wasserstoff oder Methyl und $X_1$ Methyl, Aethyl, β-Hydroxyäthyl, β-Hydroxypropyl, β-Hydroxybutyl oder α-Aethyl-β-hydroxyäthyl ist,

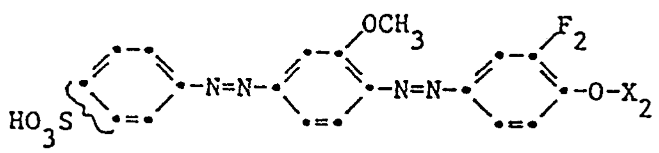

(11),

worin $F_2$ Wasserstoff oder Methyl und $X_2$ Methyl, Aethyl, β-Hydroxyäthyl β-Hydroxypropyl, β-Hydroxybutyl oder α-Aethyl-β-hydroxyäthyl ist, und

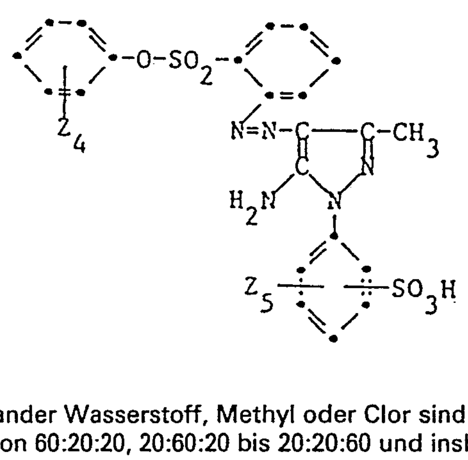

(12),

worin $Z_4$ und $Z_5$ unabhängig voneinander Wasserstoff, Methyl oder Clor sind im Gewichtsverhältnis der Farbstoffe der Formeln (10):(11):(12) von 60:20:20, 20:60:20 bis 20:20:60 und insbesondere von 1:1:1 verwendet.

11. Verfahren gemäss einem der Ansprüche 1, 2, 5, 7 und 8, dadurch gekennzeichnet, dass man den roten Farbstoff der Formel

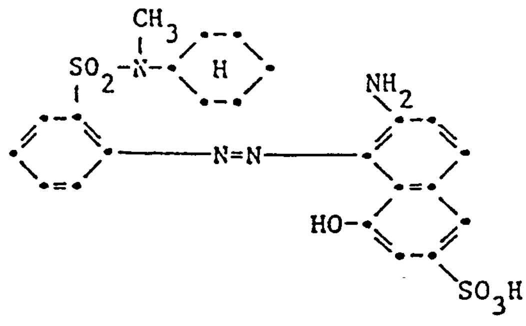

(7)

zusammen mit der blauen Farbstoffmischung der Farbstoffe der Formel

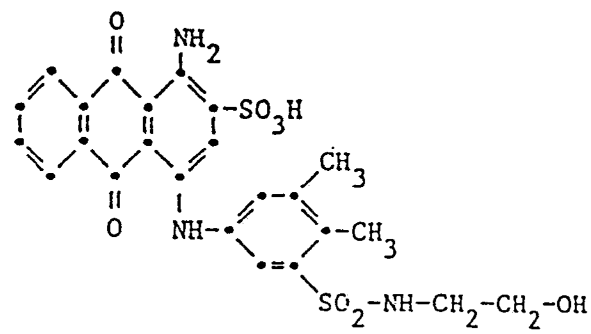

(9) und

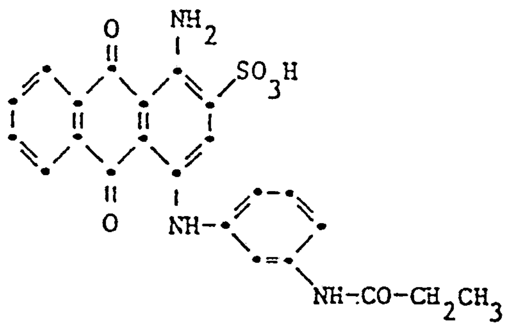

(3)

im Gewichtsverhältnis der Farbstoffe der Formeln (9) und (3) von 80:20 bis 20:80 und inbesondere von 60:40 bis 40:60, und dem orangen Farbstoff der Formel

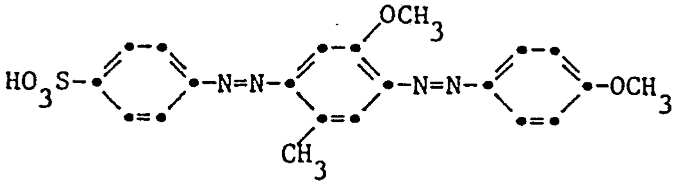

(13)

verwendet.

12. Verfahren gemäss einem der Ansprüche 1, 3, 5, 7 und 9, dadurch gekennzeichnet, dass man den roten Farbstoff der Formel

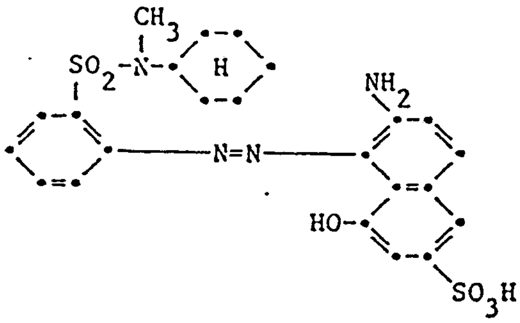

(7)

zusammen mit der blauen Farbstoffmischung der Farbstoffe der Formeln

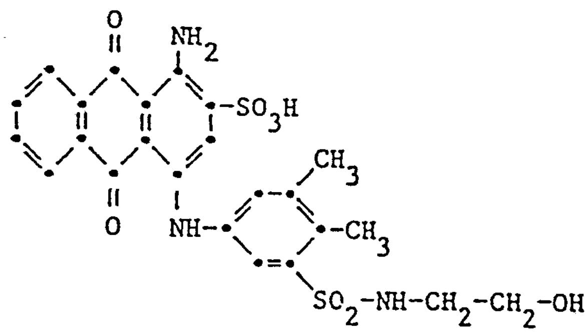

(9) und

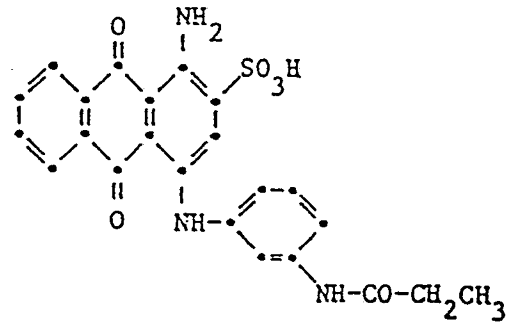

(3)

im Gewichtsverhältnis der Farbstoffe der Formeln (9) und (3) von 80:20 bis 20:80 und insbesondere 60:40 bis 40:60, und der gelben Farbstoffmischung der Farbstoffe der Formeln

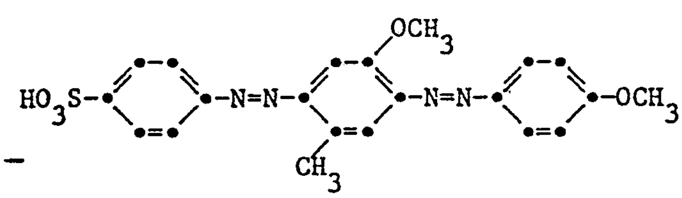

(13)

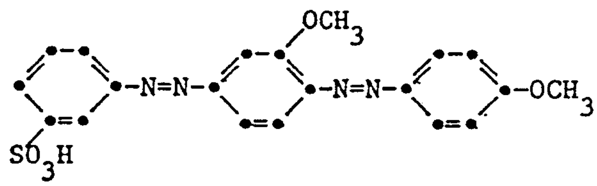

(14)

verwendet.

13. Verfahren gemäss einem der Ansprüche 1, 4, 5, 7 und 10, dadurch gekennzeichnet, dass man den roten Farbstoff der Formel

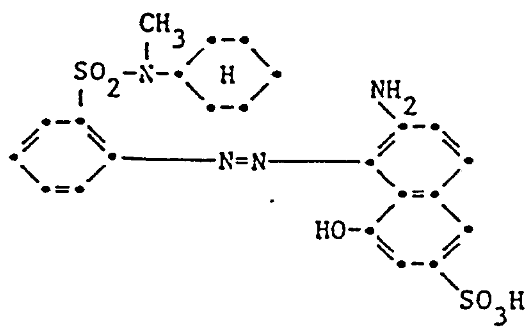

(7)

zusammen mit der blauen Farbstoffmischung der Farbstoffe der Formeln

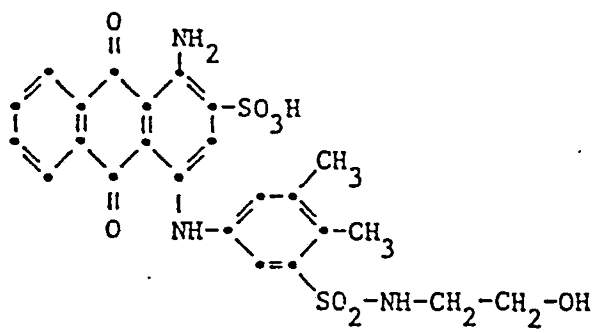

(9) und

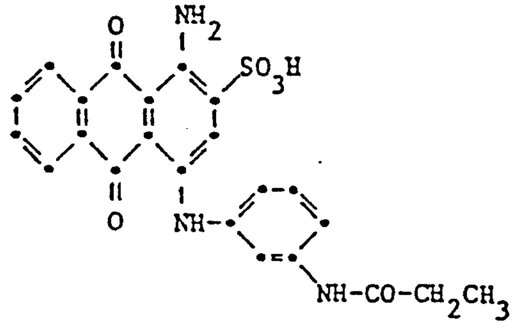

(3)

im Gewichtsverhältnis der Farbstoffe der Formeln (9) und (3) von 80:20 bis 20:80 und insbesondere von 60:40 bis 40:60, und der gelben Farbstoffmischung der Farbstoffe der Formeln

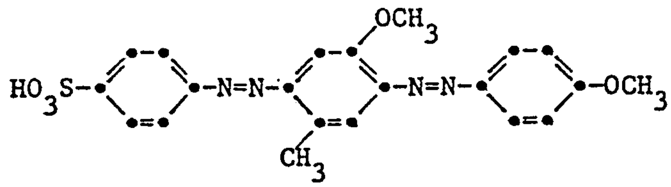

(13) ,

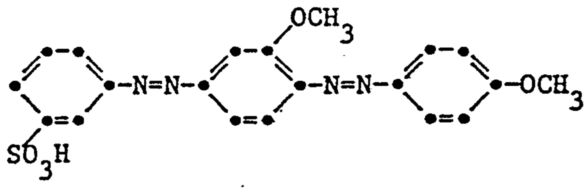

(14)

und

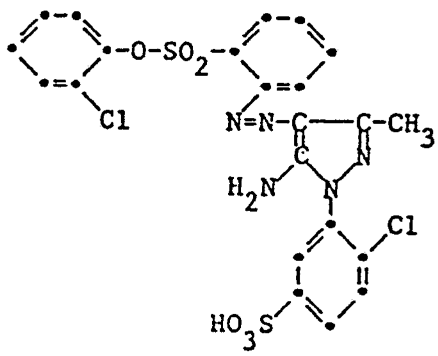

(15)

im Gewichtsverhältnis der Farbstoffe der Formeln (13) (14) und (15) von 1:1:1 verwendet.

14. Verfahren gemäss einem der Ansprüche 1, 2, und 6 bis 8, dadurch gekennzeichnet, dass man den roten Farbstoff der Formel

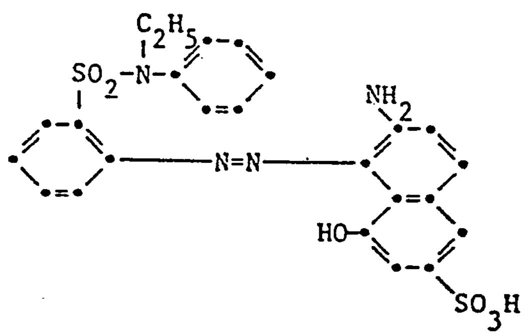

(8)

zusamnen mit der blauen Farbstoffmischung der Farbstoffe der Formeln

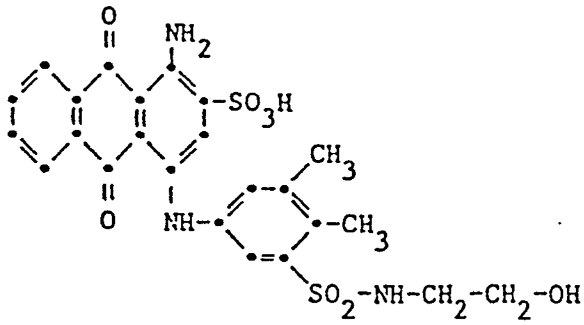

(9) und

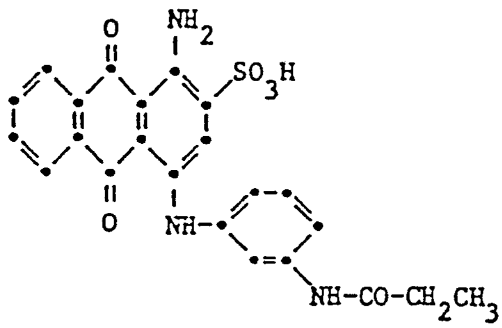

(3)

im Gewichtsverhältnis der Farbstoffe der Formeln (9) und (3) von 80:20 bis 20:80 und insbesondere von 60:40 bis 40:60, und dem orangen Farbstoff der Formel

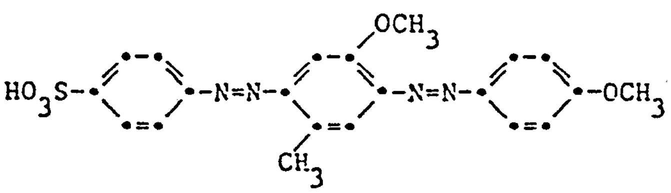

(13)

verwendet.

15. Verfahren gemäss einem der Ansprüche 1, 3 und 6, 7 und 9, dadurch gekennzeichnet, dass man den roten Farbstoff der Formel

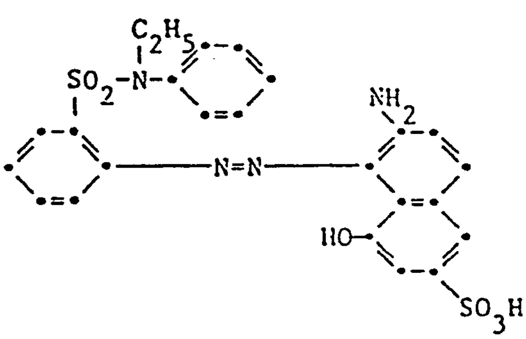

(8)

zusammen mit der blauen Farbstoffmischung der Farbstoffe der Formeln

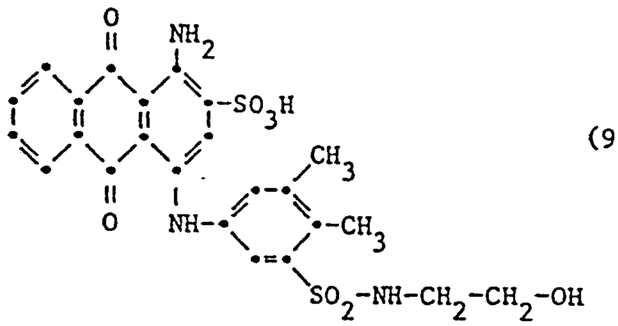

(9) und

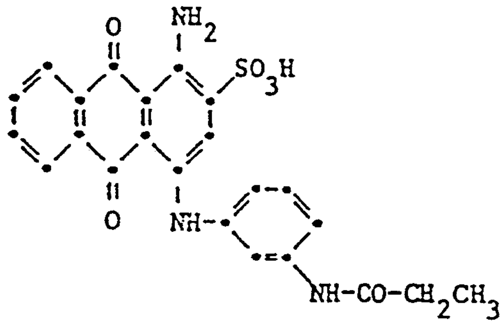

(3)

im Gewichtsverhältnis der Farbstoffe der Formeln (9) und (3) von 80:20 bis 20:80 und insbesondere von 60:40 bis 40:60, und der gelben Farbstoffmischung der Farbstoffe der Formeln

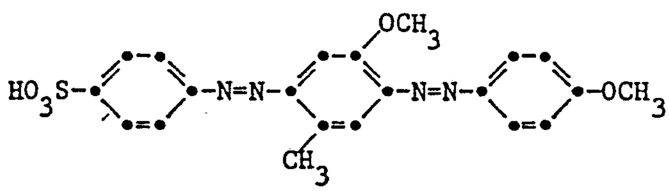

(13) und

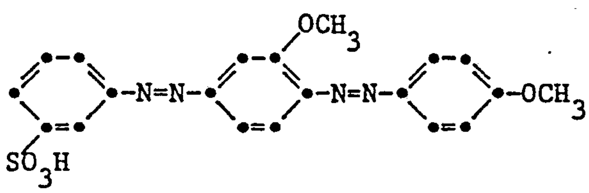

(14)

im Gewichtsverhältnis der Farbstoffe der Formeln (13) und (14) von 60:40 bis 40:60 insbesondere von 50:50, verwendet

16. Verfahren gemäss einem der Ansprüche 1, 4 und 6, 7 und 10, dadurch gekennzeichnet, dass man den roten Farbstoff der Formel

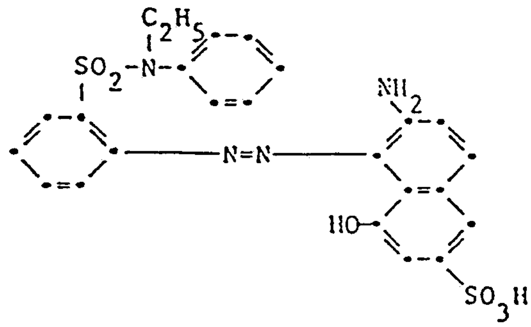

(8)

zusammen mit der blauen Farbstoffmischung der Farbstoffe der Formeln

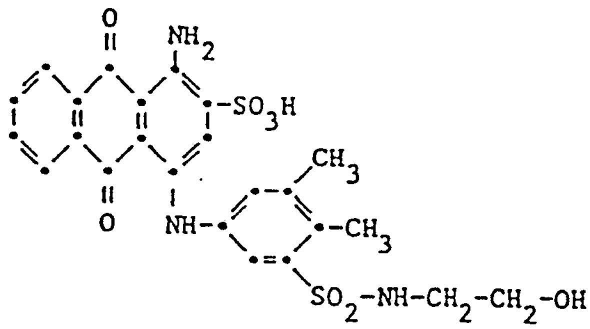

(9) und

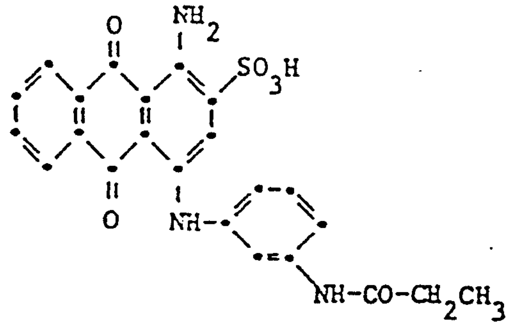

(3)

im Gewichtsverhältnis der Farbstoffe der Formeln (9) und (3) von 80:20 bis 20:80 und insbesondere von 60:40 bis 40:60, und der gelben Farbstoffmischung der Farbstoffe der Formeln

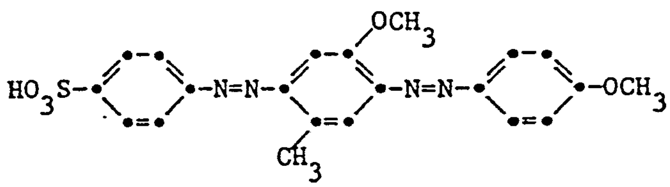 (13),

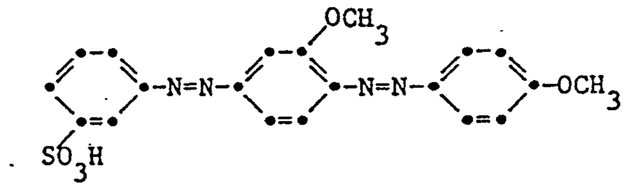 (14) und

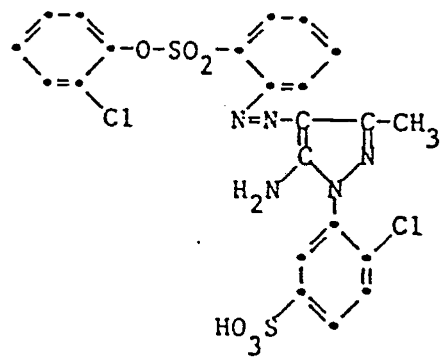 (15)

im Gewichtsverhältnis der Farbstoffe der Formeln (13),(14) und (15) von 1:1:1 verwendet.

17. Verfahren gemäss Anspruch 1 zum Trichromie-Färben oder -Bedrucken von Materialien aus natürlichem und synthetischem Polyamid, dadurch gekennzeichnet, dass man diese Materialien mit einer Färbeflotte oder Druckpaste behandelt, welche die Farbstoffmischung gemäss Anspruch 1 sowie Wasser und gegebenenfalls weitere Zusätze enthält.

18. Wässrige Färbeflotte oder Druckpaste, dadurch gekennzeichnet, dass sie Wasser, die Farbstoffmischung gemäss Anspruch 1 sowie gegebenenfalls weitere Zusätze enthält.

19. Das nach dem Verfahren gemäss Anspruch 17 bzw. unter Verwendung der Färbeflotte oder Druckpaste gemäss Anspruch 18 gefärbte oder bedruckte natürliche oder synthetische Polyamidmaterial, insbesondere Polyamidteppiche.

**Claims:**

1. A process for the trichromatic dyeing and printing of natural and synthetic polyamide material with dyestuff mixtures, which process comprises using a red dye of the formula

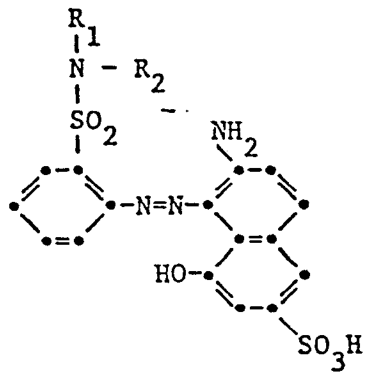

(1),

wherein $R_1$ is methyl or ethyl and $R_2$ is cyclohexyl or phenyl, together with a blue mixture of dyes of the formulae

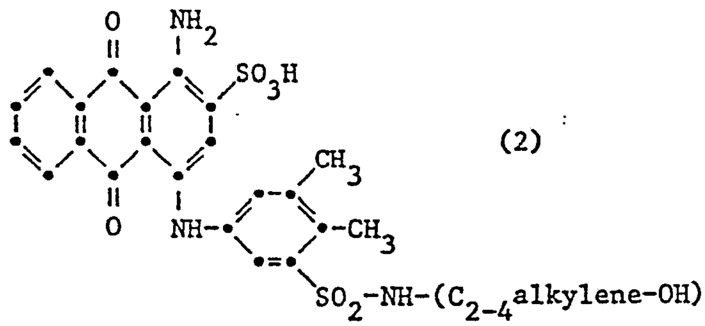

(2)

and

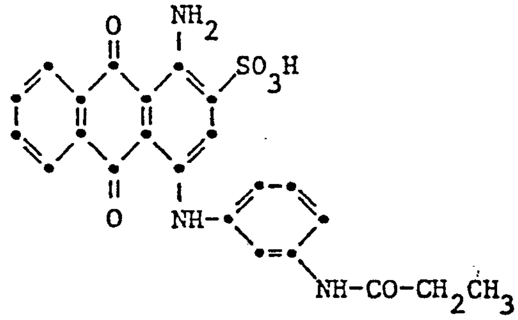

(3)

in the ratio of 90:10 to 10:90, and with a yellow or orange dye of the formula

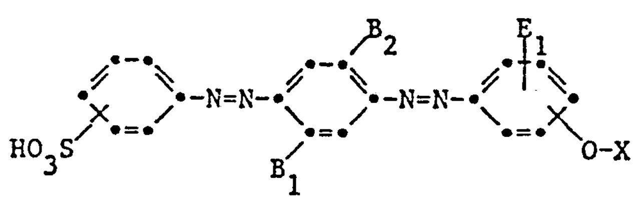

(4),

wherein $B_1$ is $C_1$-$C_4$alkyl or $C_1$-$C_4$alkoxy, each of $B_2$ and $E_1$ independently of the other is hydrogen, $C_1$-$C_4$alkyl or $C_1$-$C_4$alkoxy, and X is straight chain or branched $C_1$-$C_4$alkyl or straight chain or branched $C_2$-$C_4$ hydroxyalkyl or a mixture of the yellow and orange dyes of the formulae (4) and

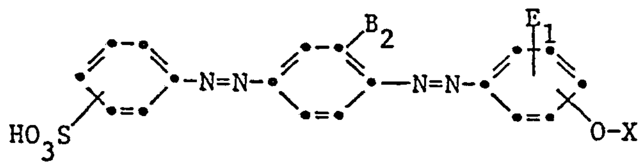

(5),

wherein $B_2$, $E_1$ and X independently of the other are as defined for formula (4), in the ratio of 80:20 to 20:80, or a mixture of the yellow and orange dyes of the formulae (4) (5) and

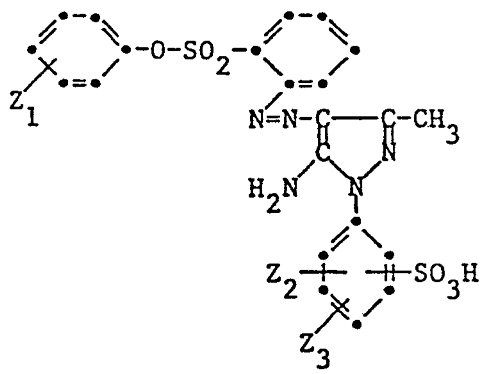

(6),

wherein each of $Z_1$, $Z_2$ and $Z_3$ independently of the other is hydrogen halogen, $C_1$-$C_4$alkyl or $C_1$-$C_4$ alkoxy, in the ratio of 80:10:10, 10:80:10 to 10:10:80.

2. A process according to claim 1, which comprises using a dye of the formula (1) together with a mixture of the dyes of the formulae (2) and (3) and a dye of the formula (4).

3. A process according to claim 1, which comprises using a dye of the formula (1) together with a mixture of dyes of the formulae (2) and (3) and a mixture of dyes of the formulae (4) and (5).

4. A process according to claim 1, which comprises using a dye of the formula (1) together with a mixture of dyes of the formulae (2) and (3) and a mixture of dyes of the formulae (4), (5) and (6).

5. A process according to anyone of claims 1 to 4,which comprises using as dye of the formula (1) the red dye of the formula

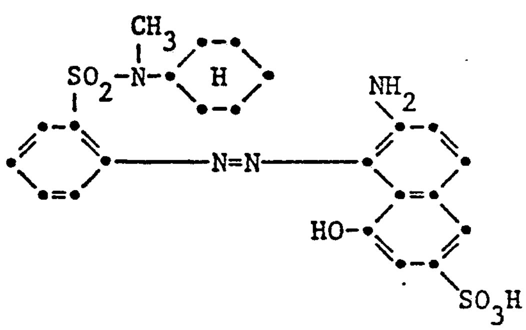

(7)

6. A process according to any one of claims 1 to 4, which comprises using as dye of the formula (1) the red dye of the formula

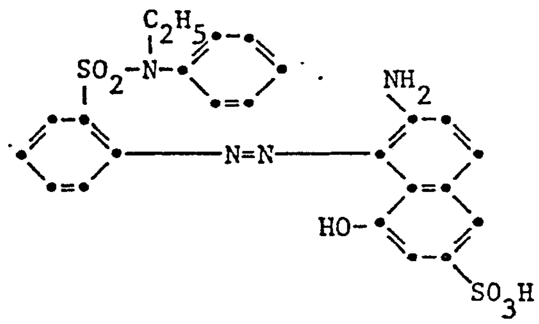

(8)

7. A process according to any one of claims 1 to 6, which comprises using as blue dyes of the formulae (2) and (3) the two dyes of the formulae

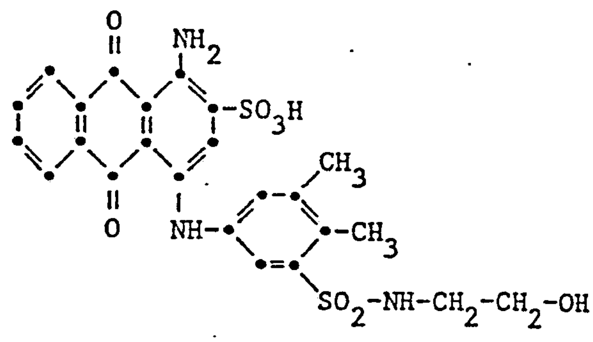

(9)

and

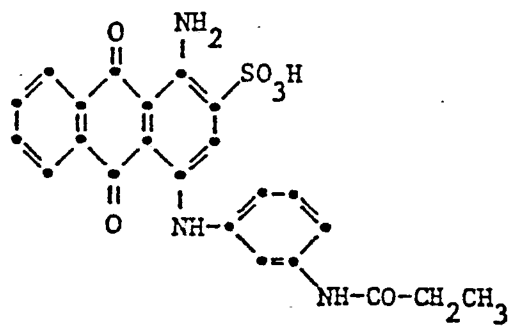

(3)

in the ratio of 80:20 to 20:80 and, in particular, of 60:40 to 40:60.

8. A process according to any one of claims 1 to 7, which comprises using as yellow or orange dye of the formula (4) a dye of the formula

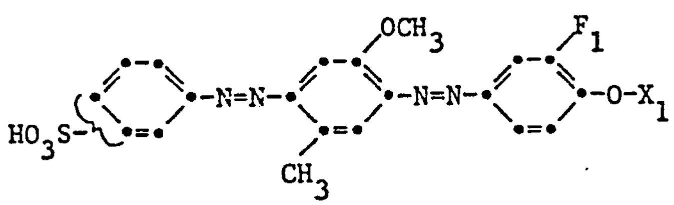

(10),

wherein $F_1$ is hydrogen or methyl and $X_1$ is methyl, ethyl, β-hydroxyethyl, β-hydroxypropyl β-hydroxybutyl or α-ethyl-β-hydroxyethyl.

9. A process according to any one of claims 1, 3 and 5 to 7, which comprises using as mixture of the yellow or orange dyes of the formulae (4) and (5) a mixture of the dyes of the formulae

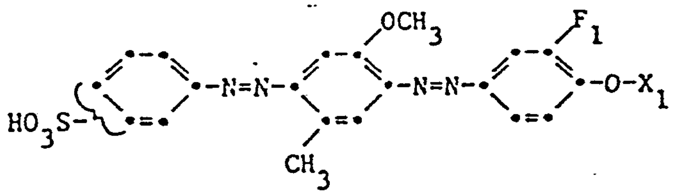 (10),

wherein $F_1$ is hydrogen or methyl and $X_1$ is methyl, ethyl, β-hydroxyethyl, β-hydroxypropyl, β-hydroxybutyl or α-ethyl-β-hydroxyethyl and

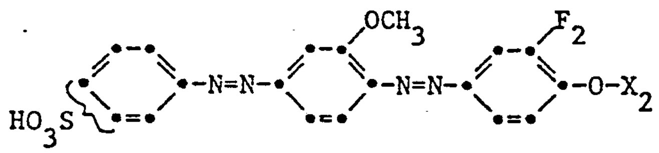 (11),

wherein $F_2$ is hydrogen or methyl and $X_2$ is methyl, ethyl, β-hydroxyethyl, β-hydroxypropyl, β-hydroxybutyl or α ethyl β hydroxyethyl, in the ratio of 60:40 to 40:60 and, in particular, of 50:50.

10. A process according to any one of claims 1 and 4 to 7 which comprises using as mixture of the yellow or orange dyes of formulae (4), (5) and (6) a mixture of the dyes of the formulae

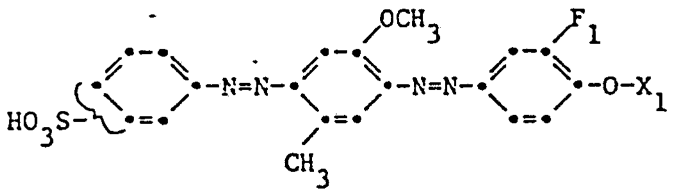 (10),

wherein $F_1$ is hydrogen or methyl and $X_2$ is methyl ethyl, β-hydroxyethyl β-hydroxypropyl β-hydroxybutyl or α-ethyl-β-hydroxyethyl,

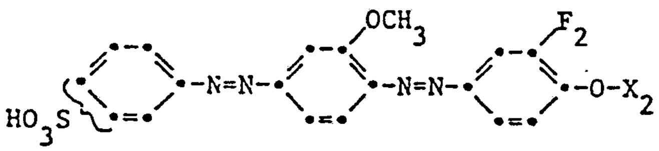 (11),

wherein $F_2$ is hydrogen or methyl and $X_2$ is methyl, ethyl, β-hydroxyethyl β-hydroxypropyl β-hydroxybutyl or α-ethyl-β-hydroxyethyl and

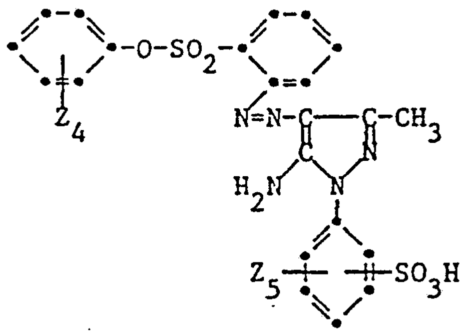

(12),

wherein each of $Z_4$ and $Z_5$ independently of the other is hydrogen methyl or chlorine, in the ratio of 60:20:20 20:60:20 to 20:20:60 and, in particular, of 1:1:1.

11. A process according to any one of claims 1 to 5, 7 and 8, which comprises using the red dye of the formula

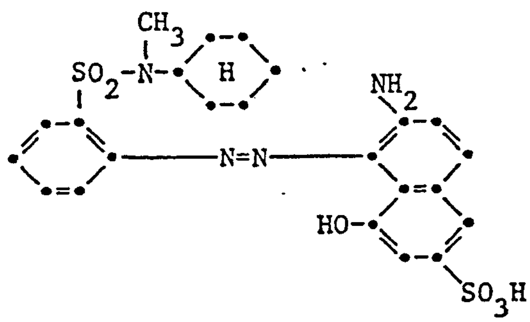

(7)

together with the blue mixture of dyes of the formulae

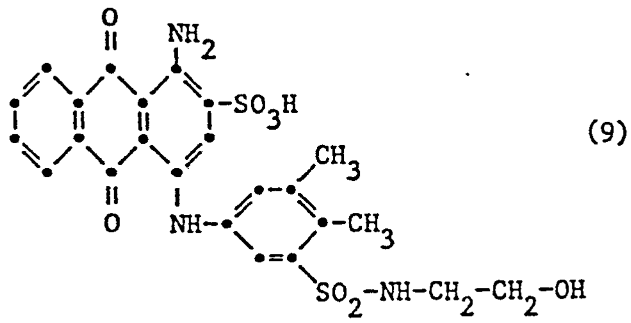

(9)

and

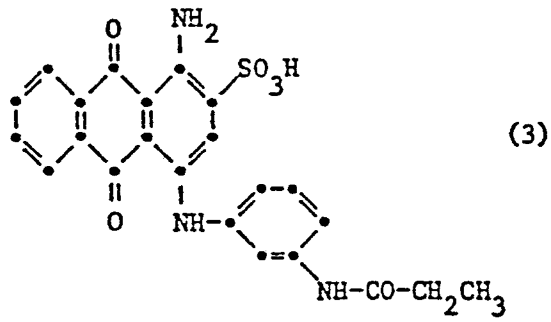

(3)

in the ratio of dyes of the formulae (9) and (3) of 80:20 to 20:80 and, in particular, of 60:40 to 40:60, and with the orange dye of the formula

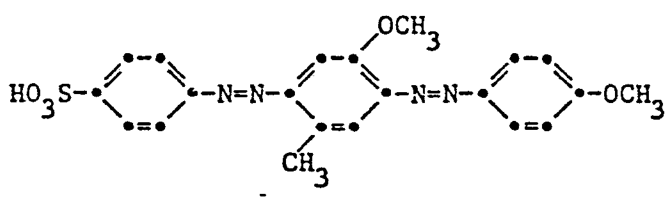

(13)

12. A process according to any one of claims 1, 3, 5, 7 or 9, which comprises using the red dye of the formula

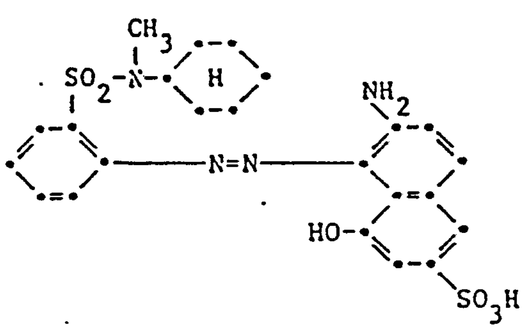

(7)

together with the blue mixture of dyes of the formulae

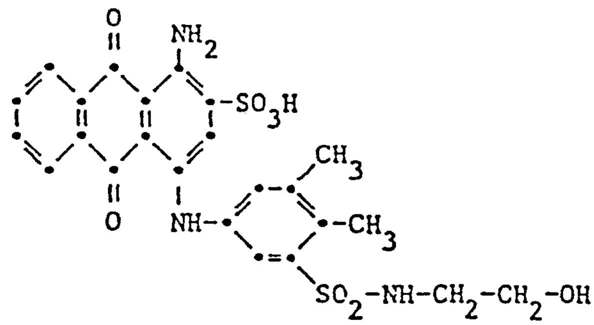

(9)

and

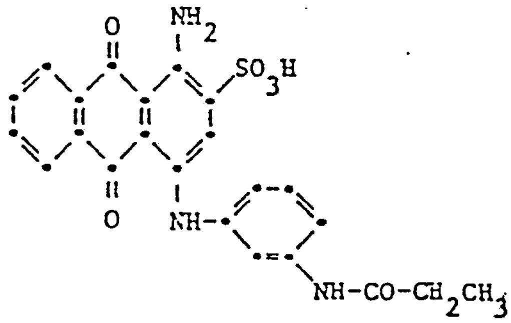

(3)

in the ratio of 80:20 to 20:80 and, in particular, of 60:40, and the yellow mixture of dyes of the formulae

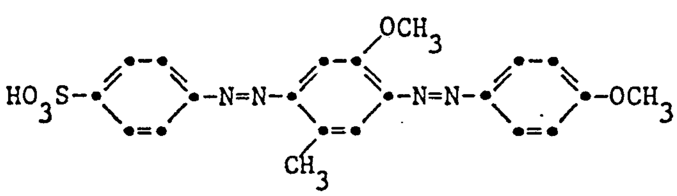

(13)

and

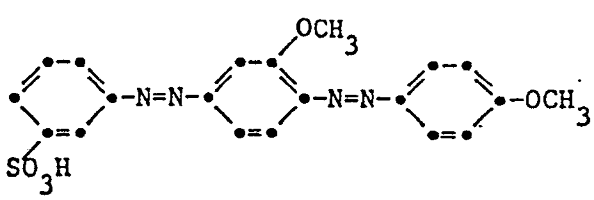

(14) .

13. A process according to any one of claims 1, 4, 5, 7 and 10, which comprises using the red dye of the formula

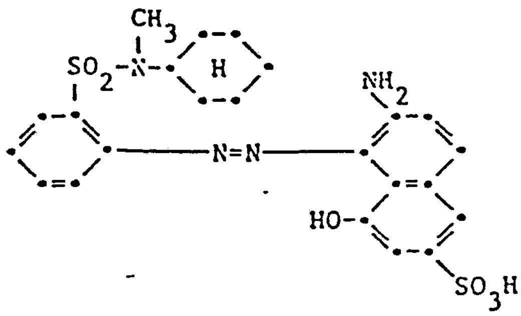

(7)

together with the blue mixture of dyes of the formulae

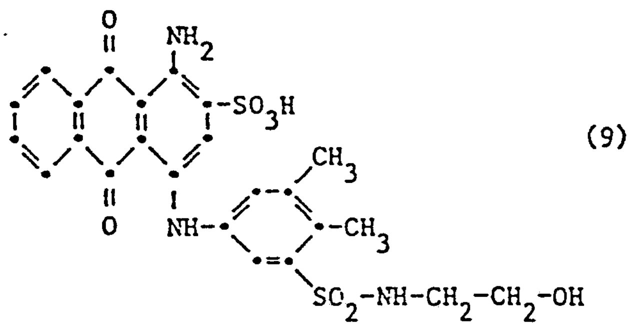

(9)

and

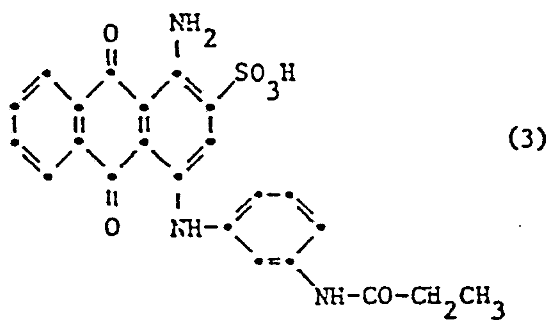

(3)

in the ratio of 80:20 to 20:80 and in particular, of 60:40 to 40:60, and the yellow mixture of dyes of the formulae

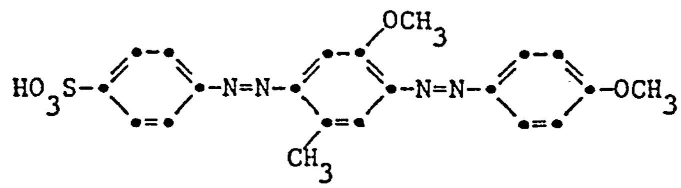

(13) ,

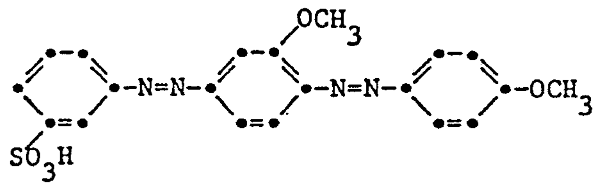

(14)

and

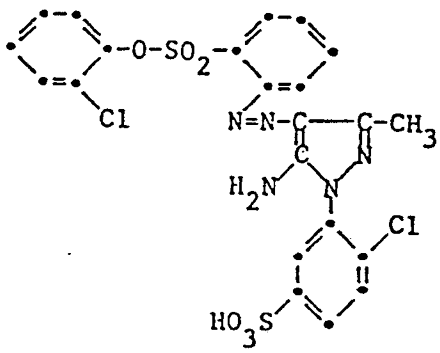

(15)

in the ratio of 1:1:1

14. A process accord ing to any one of claims 1, 2 and 6 to 8, which process comprises using the red dye of the formula

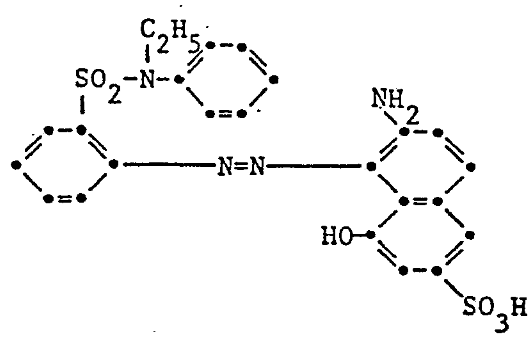

(8)

together with the blue mixture of dyes of the formulae

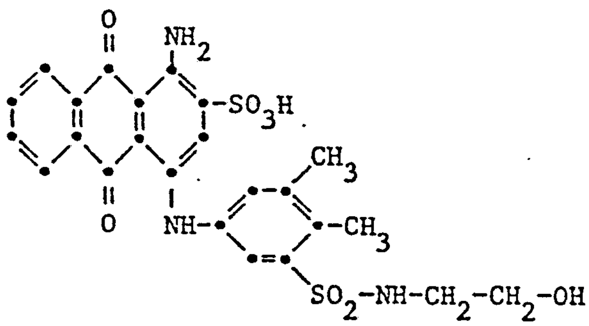

(9)

and

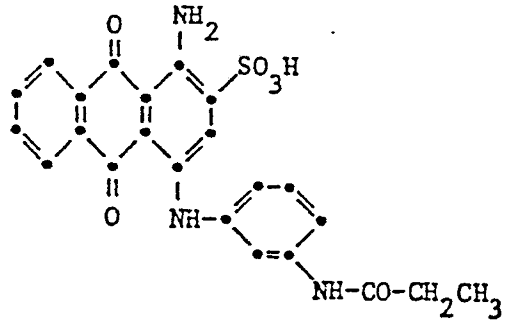

(3)

in the ratio of 8:20 to 20:80, and, in particular, of 60:40 to 40:60, and with the orange dye of the formula

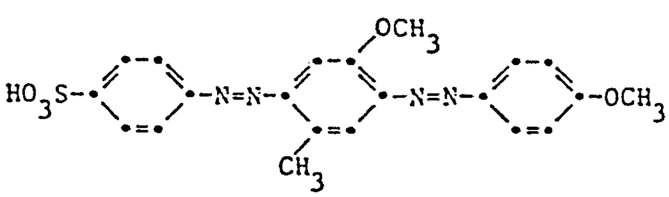

(13)

15. A process according to any one of claims 1, 3, 6, 7 or 9, which comprises using the red dye of the formula

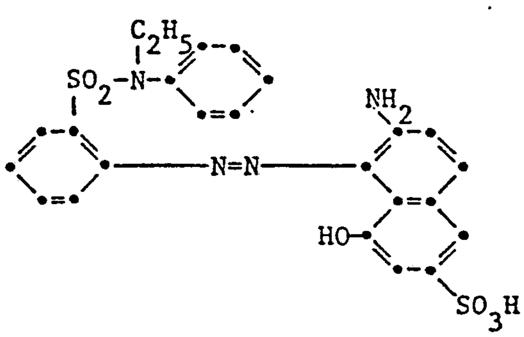

(8)

together with the blue mixture of dyes of the formulae

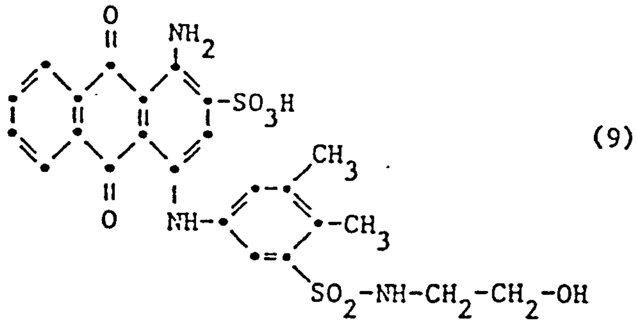

(9)

and

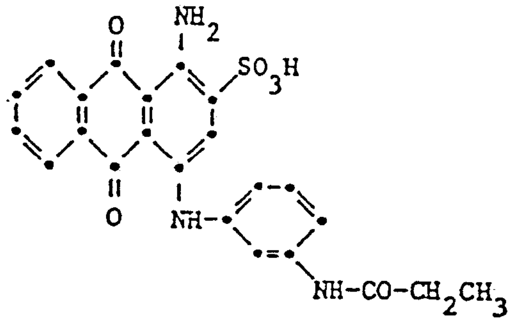

(3)

in the ratio of 8:20 to 20:80, and, in particular, of 60:40 to 40:60, and of the yellow mixture of dyes of the formulae

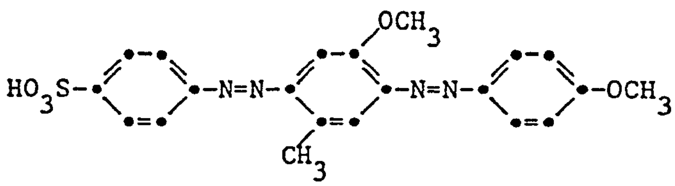

(13)

and

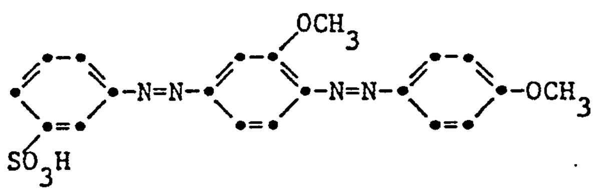

(14)

in the ratio of 60:40 to 40:60, in particular of 50:50.

16. A process according to any one of claims 1, 4, 6, 7 or 10, which comprises using the red dye of the formula

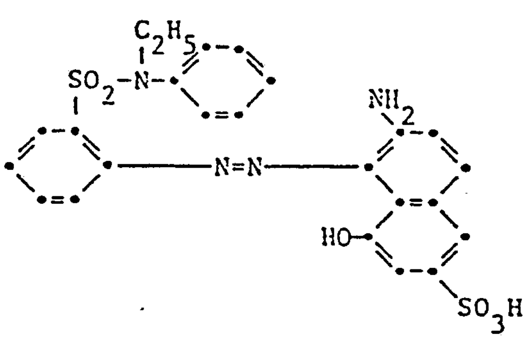

(8)

together with the blue mixture of dyes of the formulae

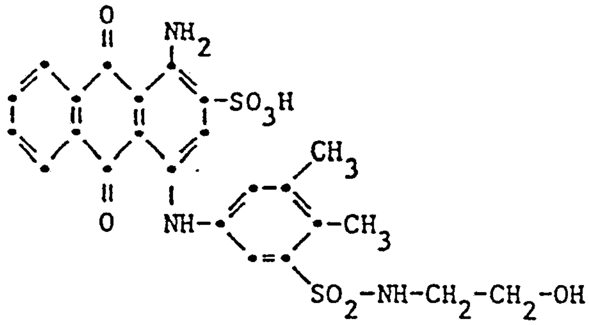

(9)

and

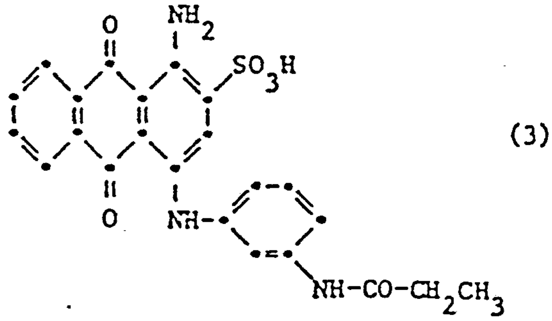

(3)

in the ratio of 80:20 to 20:80, in particular of 60:40 to 40:60, and the yellow mixture of dyes of the formulae

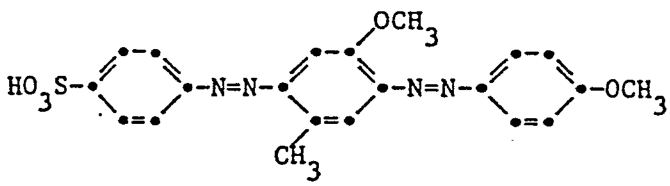

(13),

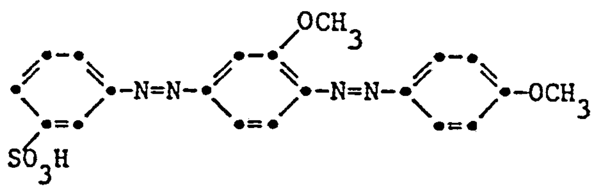

(14)

and

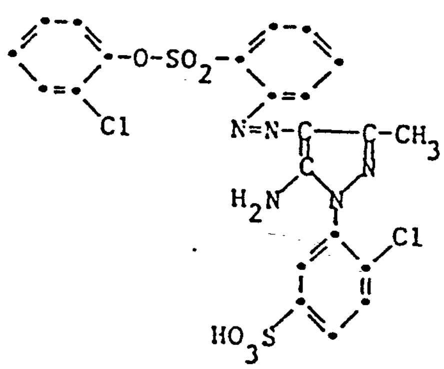

(15)

in the ratio of 1:1:1.

17. A process according to claim 1 for the trichromatic dyeing or printing of material made from natural and synthetic polyamide which process comprises treating said material with a dye liquor or printing paste which contains the dyestuff mixture according to claim 1, together with water and optionally further ingredients.

18. An aqueous dye liquor or printing paste which contains the dyestuff mixture according to claim 1 and optionally further ingredients.

19. The natural or synthetic polyamide material, especially polyamide carpet material, dyed or printed by the process according to claim 17 or using the dye liquor or printing paste according to claim 18.

**Revendications**

1. Procédé de teinture et d'impression en trichromie de matières en polyamides naturels et synthétiques, par des mélanges de colorants, caractérisé en ce qu'on utilise un colorant rouge de formule

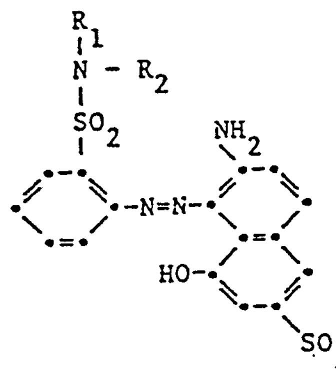

(1),

dans laquelle $R_1$ est le radical méthyle ou éthyle et $R_2$ est le radical cyclohexyle ou phényle, en même temps qu'un mélange de colorants bleu de formules

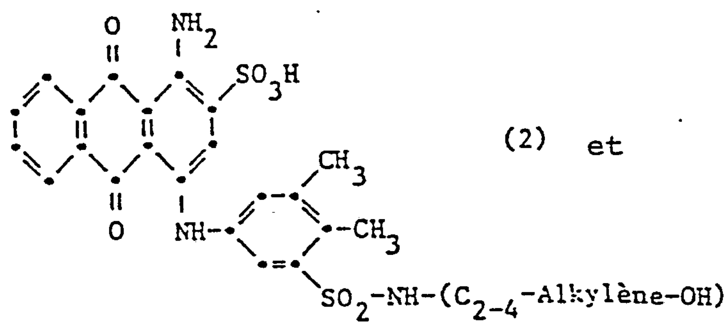

(2) et

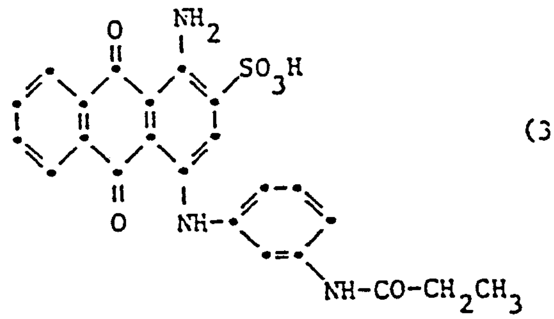

(3)

selon un rapport pondéral de 90:10 à 10:80, et qu'un colorant jaune ou orangé de formule

dans laquelle $B_1$ est un radical alkyle en $C_{1-4}$ ou alcoxy en $C_{1-4}$, $B_2$ et $E_1$ sont, indépendamment l'un de l'autre, chacun l'hydrogène, un radical alkyle en $C_{1-4}$ ou alcoxy en $C_{1-4}$, et X est un radical alkyle en $C_{1-4}$ à chaîne droite ou ramifiée ou un radical hydroxyalkyle en $C_{2-4}$ à chaîne droite ou ramifiée, ou qu'un mélange des colorants jaunes ou orangés de formules (4) et

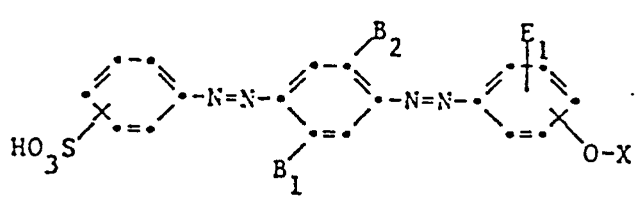

(4),

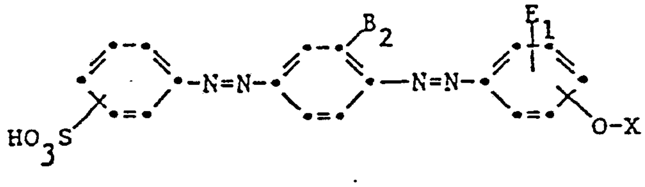

(5),

où $B_2$, $E_1$ et X, dans la formule (5), indépendamment les uns des autres, ont chacun les significations données pour la formule (4), selon un rapport pondéral de 80:20 à 20:80, ou qu'un mélange des colorants jaunes ou orangés de formule (4), (5) et,

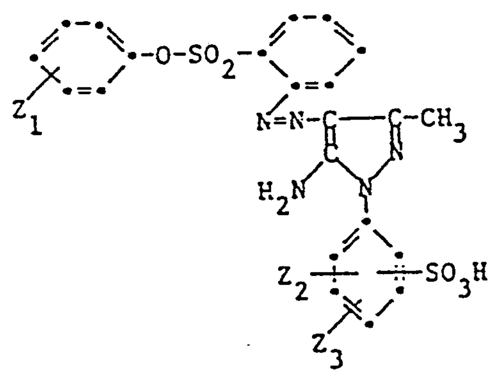

(6),

où $Z_1$, $Z_2$ et $Z_3$, indépendamment les uns des autres, sont chacun l'hydrogène, un halogène, un radical alkyle en $C_{1-4}$ ou alcoxy en $C_{1-4}$, selon un rapport pondéral entre les colorants de formules (4), (5) et (6), de 80:10:10, 10:80:10 à 10:10:80.

2. Procédé selon la revendication 1, caractérisé en ce qu'on utilise un colorant de formule (1) en même temps qu'un mélange de colorants de formules (2) et (3) et qu'un colorant de formule (4).

3. Procédé selon la revendication 1, caractérisé en ce qu'on utilise un coloiant de formule (1) en même temps qu'un mélange de colorants de formules (2) et (3) et qu'un mélange des colorants de formules (4) et (5).

4. Procédé selon la revendication 1, caractérisé en ce qu'on utilise un colorant de formule (1) en même temps qu'un mélange de colorants de formules (2) et (3) et qu'un mélange des colorants de formules (4), (5) et (6).

5. Procédé selon l'une des revendications 1 à 4, caractérisé en ce qu'on utilise en tant que colorant de formule (1) le colorant rouge de formule

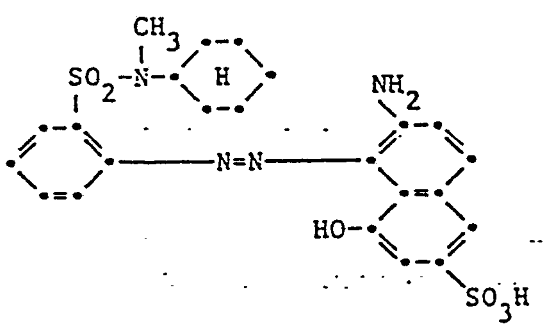

(7)

6. Procédé selon l'une des revendications 1 à 4, caractérisé en ce qu'on utilise en tant que colorant de formule (1) le colorant rouge de formule

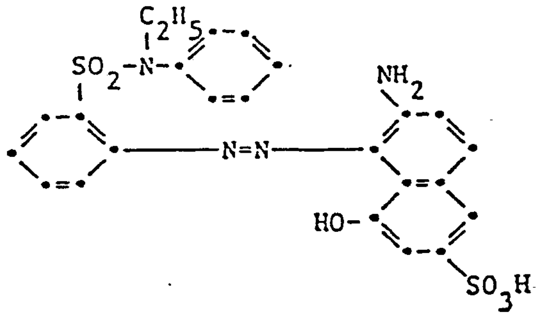

(8)

7. Procédé selon l'une des revendications 1 à 6, caractérisé en ce qu'on utilise en tant que colorants bleus de formules (2) et (3) les deux colorants de formules

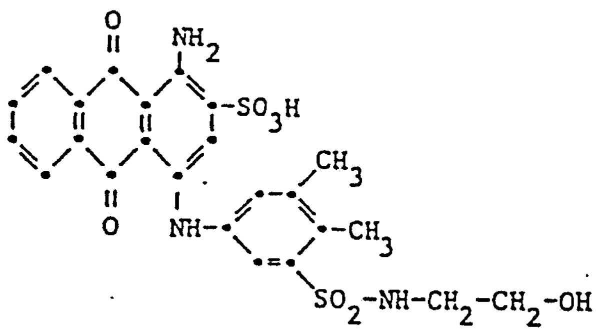

(9) et

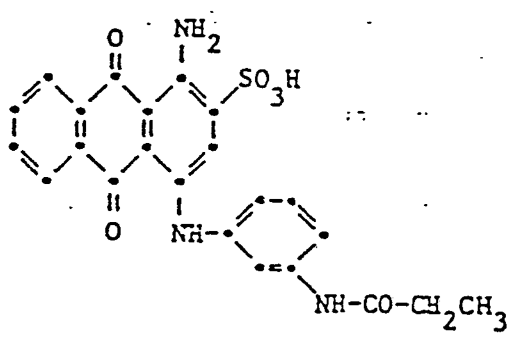

(3)

selon un rapport pondéral de 80:20 à 20:80 et en particulier de 60:40 à 40:60.

8. Procédé selon l'une des revendications 1 à 7, caractérisé en ce qu'on utilise en tant que colorant jaune ou orangé de formule (4) un colorant de formule

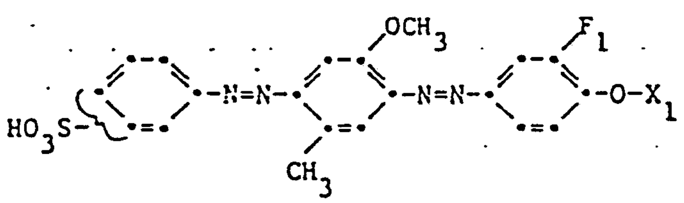

(10),

dans laquelle $F_1$ est l'hydrogène ou le radical méthyle, et $X_1$ est le radical méthyle, éthyle, β-hydroxyéthyle, β-hydroxypropyle, β-hydroxybutyle ou α-éthyl-β-hydroxyéthyle.

9. Procédé selon l'une des revendications 1, 3 et 5 à 7, caractérisé en ce qu'on utilise en tant que mélange des colorants jaunes ou orangés de formules (4) et (5) un mélange des colorants de formules

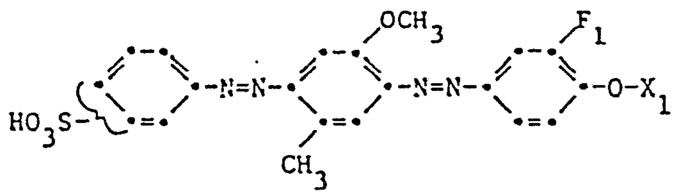

(10),

où $F_1$ est l'hydrogène ou le radical méthyle et $X_1$ est le radical méthyle, éthyle, β-hydroxyéthyle, β-hydroxypropyle, β-hydroxybutyle ou α-éthyl-β-hydroxyéthyle, et

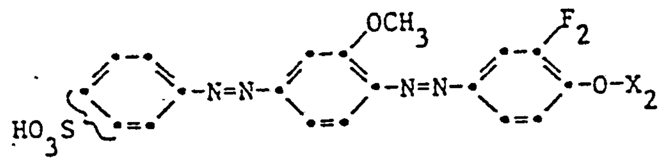

(11),

dans laquelle $F_2$ est l'hydrogène ou le radical méthyle et $X_2$ est le radical méthyle, éthyle, β-hydroxyéthyle, β-hydroxypropyle, β-hydroxybutyle ou α-éthyl-β-hydroxyéthyle, selon un rapport pondéral de 60:40 à 40:60, et en particulier de 50:50.

10. Procédé selon l'une des revendications 1 et 4 à 7, caractérisé en ce qu'on utilise en tant que mélange des colorants jaunes ou orangés de formules (4), (5) et (6) un mélange des colorants de formules

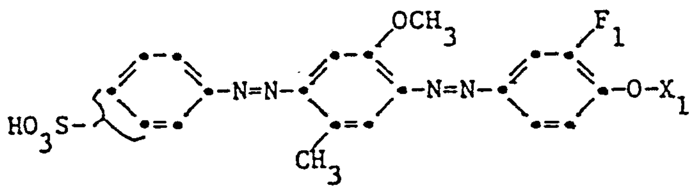

(10),

dans laquelle $F_1$ est l'hydrogène ou le radical méthyle, et $X_1$ est le radical méthyle, éthyle, β-hydroxyéthyle, β-hydroxypropyle, β-hydroxybutyle ou α-éthyl-β-hydroxyéthyle,

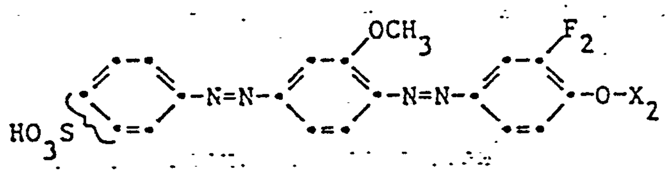

(11),

dans laquelle $F_2$ est l'hydrogène ou le radical méthyle, et $X_2$ est le radical méthyle, éthyle, β-hydroxyéthyle, β-hydroxypropyle, β-hydroxybutyle ou α-éthyl-β-hydroxyéthyle, et

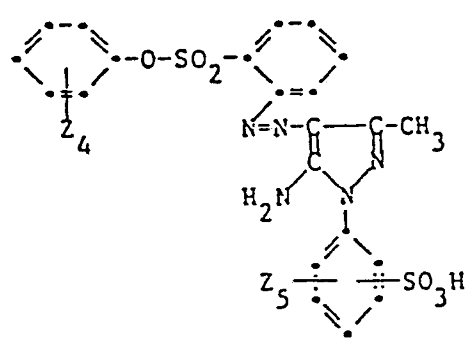

(12),

dans laquelle $Z_4$ et $Z_5$, indépendamment l'un de l'autre, sont chacun l'hydrogène, le radical méthyle ou le chlore, selon un rapport pondéral entre les colorants de formules (10):(11):(12) de 60:20:20, 20:60:20 à 20:20:60 et en particulier de 1:1:1.

11. Procédé selon l'une des revendications 1 à 5, 7 et 8, caractérisé en ce qu'on utilise le colorant rouge de

formule

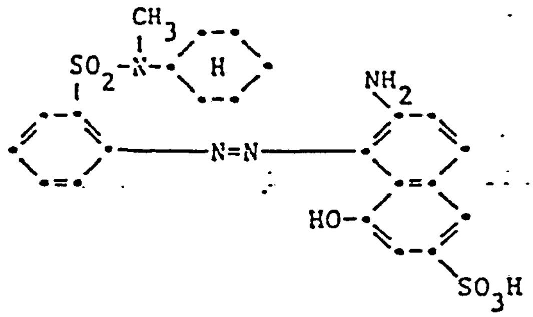

(7)

en même temps que le mélange de colorants bleu des colorants de formules

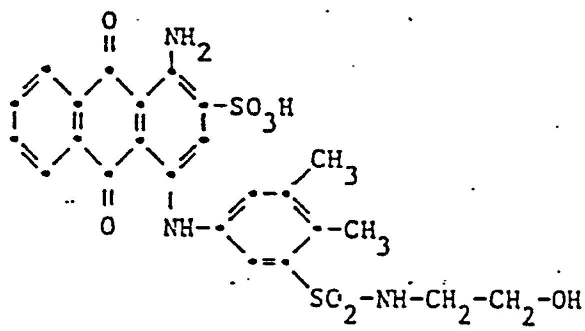

(9) et

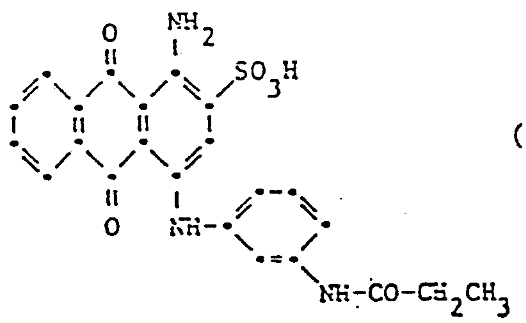

(3)

selon un rapport pondéral entre les colorants de formules (8) et (3) de 80:20 à 20:80 et en particulier de 60:40 à 40:60, et que le colorant orangé de formule

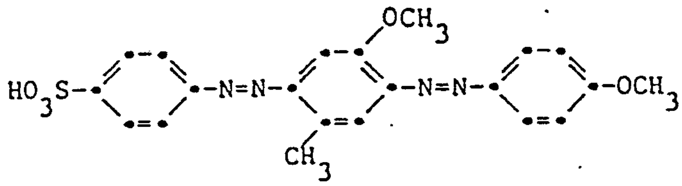

(13)

12. Procédé selon l'une des revendications 1, 3, 5, 7 et 9, caractérisé en ce qu'on utilise le colorant rouge de formule

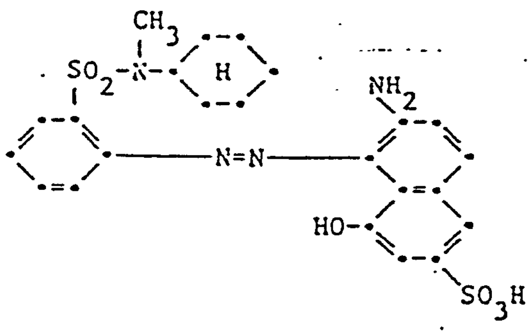

(7)

en même temps que le mélange de colorants bleu des colorants de formules

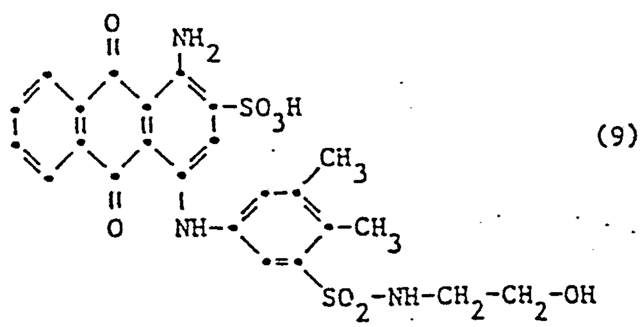

(9) et

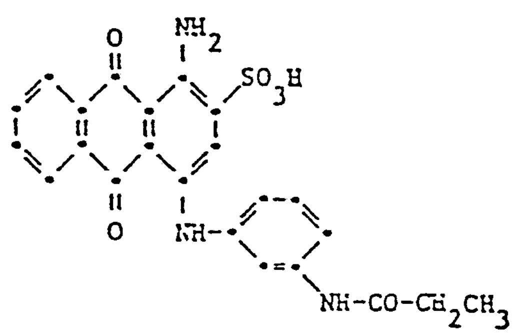

(3)

selon un rapport pondéral entre les colorants de formules (8) et (3) de 80:20 à 20:80, et en particulier de 60:40 a 40:60, et que le mélange de colorants jaune des colorants de formules

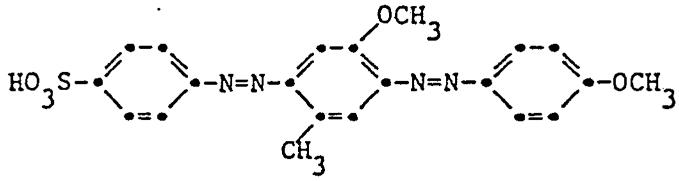

(13)

et

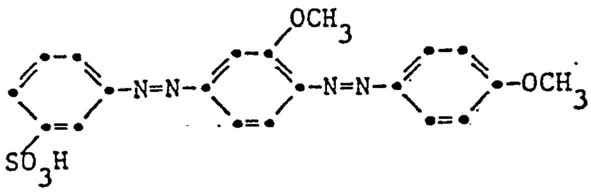

(14)

13. Procédé selon l'une des revendications 1, 4, 5, 7 et 10, caractérisé en ce qu'on utilise le colorant rouge de formule

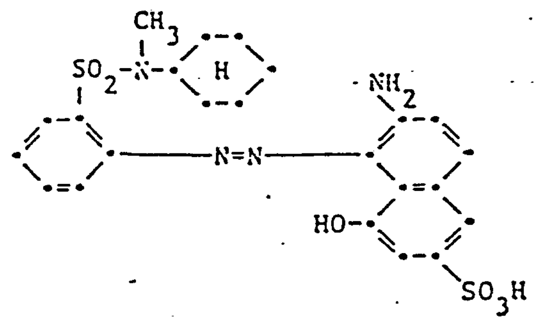

(7)

en même temps que le mélange de colorants bleu des colorants de formules

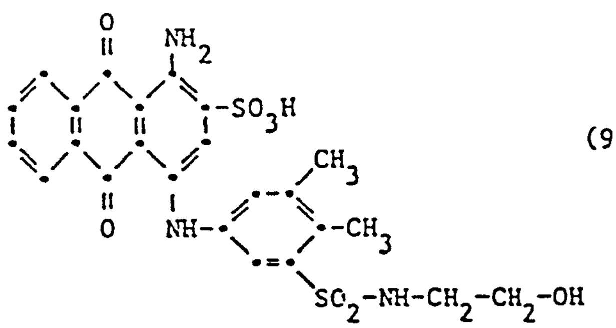

(9) et

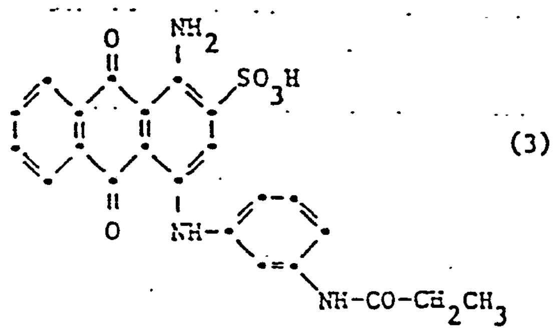

(3)

selon un rapport pondéral entre les colorants de formules (9) et (3) de 80:20 à 20:80 et en particulier de 60:40 à 40:60, et que le mélange de colorants jaune des colorants de formules

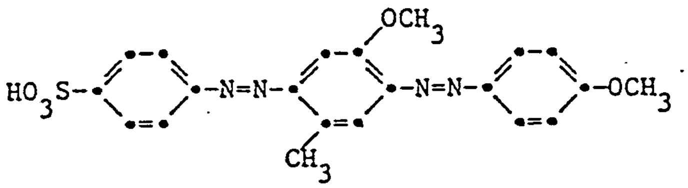

(13) ,

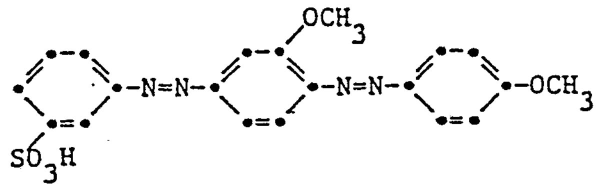

(14)

et

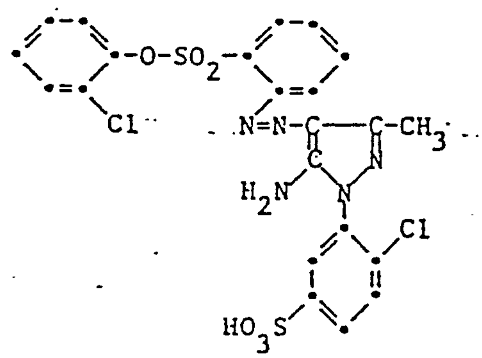

(15)

selon un rapport pondéral entre les colorants de formules (13), (14) et (15) de 1:1:1.

14. Procédé selon l'une des revendications 1, 2 et 6 à 8, caractérisé en ce qu'on utilise le colorant rouge de formule

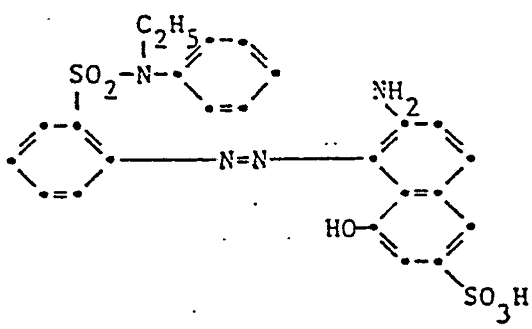

(8)

en même temps que le mélange de colorants bleu des colorants de formules

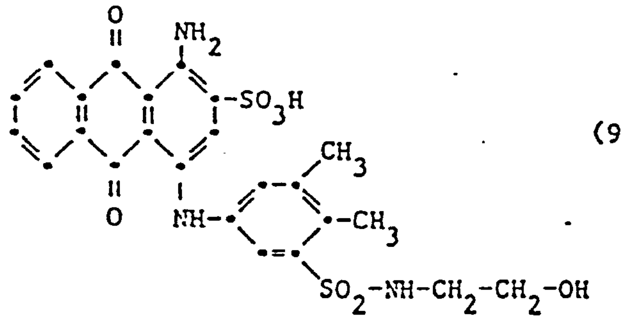

(9) et

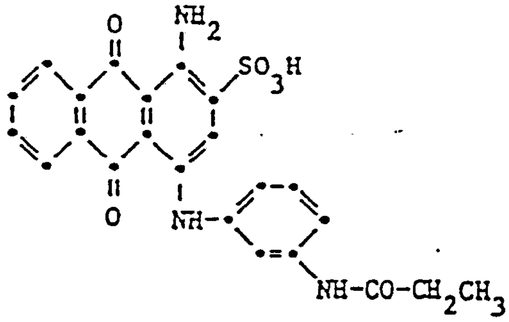

(3)

selon un rapport pondéral entre les colorants de formules (9) et (3) de 80:20 à 20:80 et en particulier de 60:40 à 40:60, et que le colorant orangé de formule

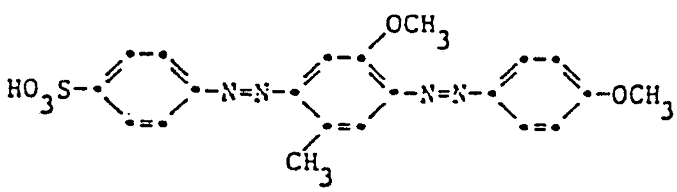

(13)

15. Procédé selon l'une des revendications 1, 3 et 6, 7 et 9, caractérisé en ce qu'on utilise le colorant rouge de formule

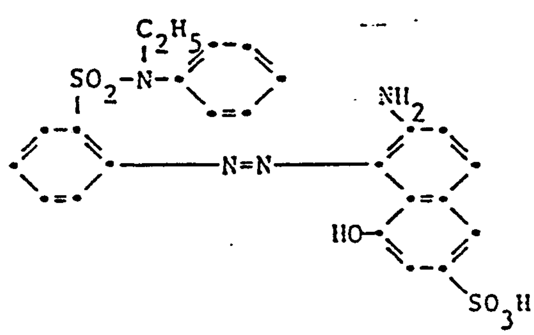

(8)

en même temps que le mélange de colorants bleu des colorants de formules

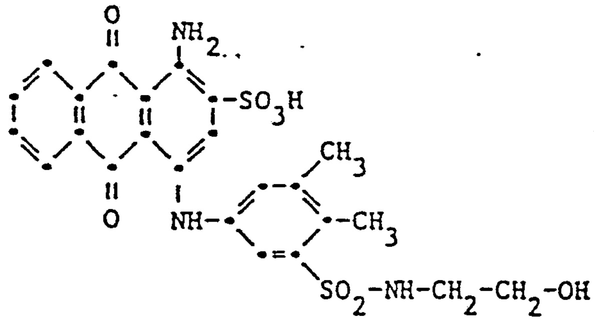

(9) et

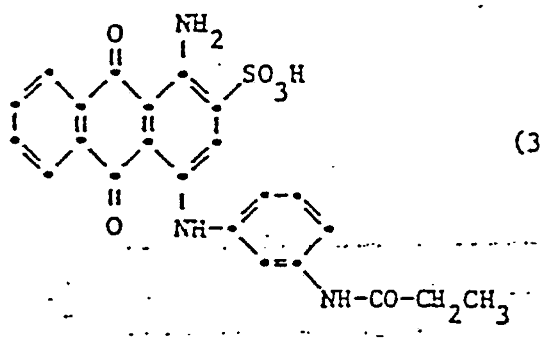

(3)

selon un rapport pondéral entre les colorants de formules (9) et (3) de 80:20 à 20:80 et en particulier de 60:40 à 40:60, et que le mélange de colorants jaune des colorants de formules

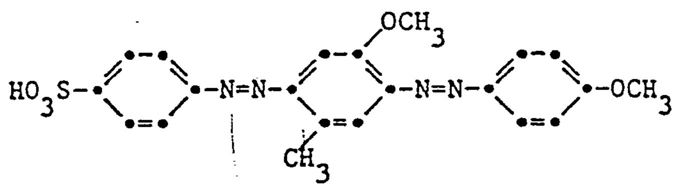

(13) et

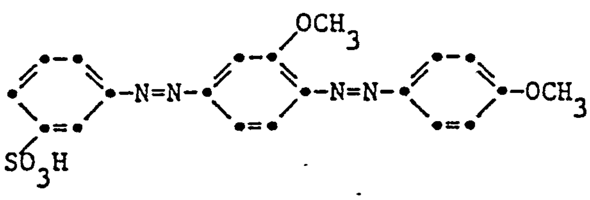

(14)

selon un rapport pondéral entre les colorants de formules (13) et (14) de 60:40 à 40:60, en particulier de 50:50.

16. Procédé selon l'une des revendications 1, 4 et 6, 7 et 10, caractérisé en ce qu'on utilise le colorant rouge de formule

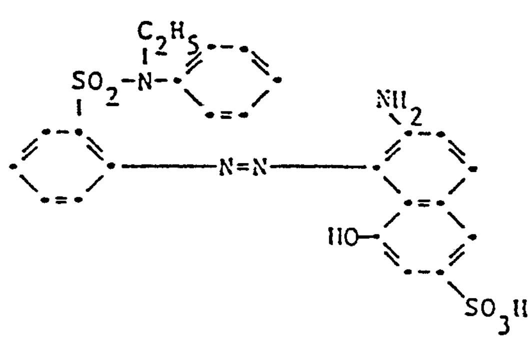

(S)

en même temps que le mélange de colorants bleu des colorants de formules

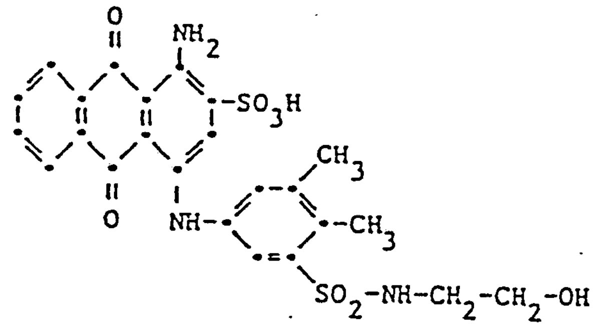

(9)

et

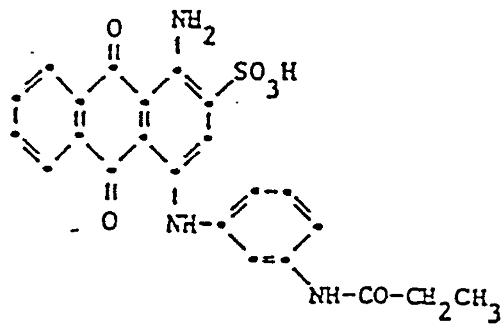

(3)

selon un rapport pondéral entre les colorants de formules (9) et (3) de 80:20 à 20:80 et en particulier de 60:40 à 40:60, et que le mélange de colorants jaune des colorants de formules

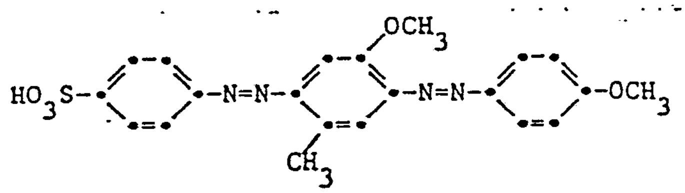

(13),

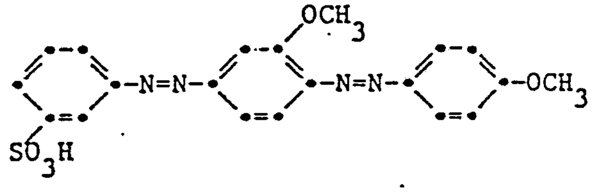

(14)

et

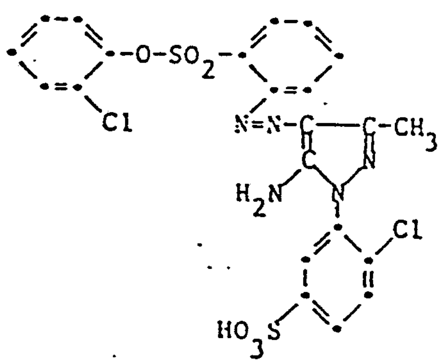

(15)

selon un rapport pondéral entre les colorants de formules (13), (14) et (15) de 1:1:1.

17. Procédé selon la revendication 1, pour la teinture ou l'impression en trichromie de matières en polyamide naturel ou synthétique, caractérisé en ce qu'on traite ces matières par un bain de teinture ou une pâte d'impression qui contient le mélange de colorants selon la revendication 1, ainsi que de l'eau et éventuellement d'autres additifs.

18. Bain de teinture aqueuse ou pâte d'impression aqueuse, caractérisé en ce qu'il ou elle contient de l'eau, le mélange de colorants selon la revendication 1, et éventuellement d'autres additifs.

19. La matière en polyamide naturel ou synthétique, en particulier des tapis en polyamide, imprimée ou teinte selon la revendication 17 ou par l'utilisation du bain de teinture ou de la pâte d'impression selon la revendication 18.